# EUROPÄISCHE PATENTSCHRIFT

(11) **EP 3 172 824 B1**
(45) Veröffentlichungstag und Bekanntmachung des Hinweises auf die Patenterteilung: **30.08.2023**
(21) Anmeldenummer: 15736247.6
(22) Anmeldetag: 09.07.2015
(51) Int. Cl.: H02M 7/483, H02J 7/00

(54) **MODULARES ENERGIESPEICHER-DIREKTUMRICHTERSYSTEM**
MODULAR ENERGY STORAGE DIRECT CONVERTER SYSTEM
SYSTÈME MODULAIRE DE CONVERTISSEUR DIRECT ET D'ACCUMULATEUR D'ÉNERGIE

(30) Priorität: 23.07.2014 DE 102014110410
(43) Veröffentlichungstag der Anmeldung: 31.05.2017
(73) Patentinhaber: Universität der Bundeswehr München, 85577 Neubiberg (DE)
(72) Erfinder: HELLING, Florian, 81539 München (DE); WEYH, Thomas, 80637 München (DE)
(74) Vertreter: Lucke, Andreas
(86) Internationale Anmeldenummer: PCT/EP2015/065658
(87) Internationale Veröffentlichungsnummer: WO 2016/012247

(56) Entgegenhaltungen:
- WO-A2-2012/072168
- DE-A1-102010 041 077
- DE-A1-102011 089 648
- DE-A1-102011 108 920
- JP-A- 2011 045 210
- US-A1- 2005 127 853
- LAXMAN MAHARJAN ET AL: "Fault-Tolerant Operation of a Battery-Energy-Storage System Based on a Multilevel Cascade PWM Converter With Star Configuration", IEEE TRANSACTIONS ON POWER ELECTRONICS, INSTITUTE OF ELECTRICAL AND ELECTRONICS ENGINEERS, USA, Bd. 25, Nr. 9, 1. September 2010 (2010-09-01), Seiten 2386-2396, XP011306829, ISSN: 0885-8993

## Beschreibung

### GEBIET DER ERFINDUNG

Die vorliegende Erfindung liegt auf dem Gebiet der Elektrotechnik. Insbesondere betrifft sie ein modulares Energiespeicher-Direktumrichtersystem, das mindestens einen Brückenzweig enthält, der eine Mehrzahl von hintereinander geschalteten Modulen umfasst.

### HINTERGRUND DER ERFINDUNG

Batteriesysteme gewinnen zunehmende Bedeutung in zahlreichen Gebieten der Technik. Eine besonders wichtige Anwendung betrifft Elektrofahrzeuge, bei denen die Batteriesysteme eine Schlüsselkomponente für die Mobilität der Zukunft darstellen. Eine weitere Anwendung von außerordentlicher Bedeutung sind Batteriesysteme als stationäre Energiespeicher für regenerative Energien.

Viele der gegenwärtig eingesetzten Energiespeichersysteme bestehen aus einer Reihenschaltung oder einer Parallelschaltung einiger bis hin zu tausenden Energiespeicherelementen, wobei an jedem Energiespeicherelement eine im Vergleich zur benötigten Gesamtspannung relativ kleine Spannung anliegt bzw. angelegt werden kann. Durch eine Reihenschaltung summieren sich dabei die Einzelspannungen zur Gesamtspannung auf. Durch eine Parallelschaltung wird die Ladung aufsummiert. Beispielsweise werden in einem Elektroauto wie etwa dem Tesla-Modell S ca. 6.000 Batteriezellen verbaut. Die Zellspannungen und die elektrischen Eigenschaften der Zellen hängen stark von der verwendeten Zelltechnologie ab. Die Zellspannungen typischer Systeme reichen dabei von 1,0 Volt bis 3,7 Volt.

Durch leicht verschiedene physikalische Eigenschaften der Zellen unterscheiden sich diese hinsichtlich ihrer Kapazitäten und ihres Alterungsverhaltens. Bedingt durch die daraus resultierenden unterschiedlichen Spannungen der einzelnen Zellen ist es in aktuellen Batteriesystemen notwendig, die Ladungen aller Zellen auszubalancieren, um die zu verwendende Gesamtkapazität des Batteriesystems zu erhöhen. Für dieses Ausbalancieren werden gegenwärtig sogenannte Batterie-Management-Systeme (BMS) verwendet, die sich eines aktiven oder passiven Ausbalancierens bedienen. Solche bekannten Batterie-Management-Systeme sind jedoch vergleichsweise aufwendig, verlustbehaftet, meist teuer und unter bestimmten Umständen sogar schädlich für die Zellen.

Um die Energie des Batteriesystems für einen Verbraucher nutzbar zu machen, wird ferner noch ein leistungselektronischer Umrichter benötigt, der zur Stabilisierung der Ausgangsspannung bzw. zur Erzeugung einer gewünschten Phase einer Wechselspannung dient. Darüber hinaus wird zum Laden des Batteriesystems üblicherweise ein weiterer Umrichter, ein sog. Ladeumrichter benötigt.

Der beschriebene Stand der Technik von Batteriesystemen hat eine Reihe von Nachteilen. Ein Nachteil besteht darin, dass die Arbeitspunkte des Systems sich entweder nicht oder nur geringfügig an die aktuellen Erfordernisse anpassen lassen und dass die Gesamtleistung des Systems typischerweise durch die schwächste Subeinheit im Verbund limitiert wird.

Bei BMS, die sich einer passiven Ausbalancierung der Energiespeicherzellen bedienen, wird willentlich Energie verschwendet, indem elektrische Energie in thermische Energie umgewandelt wird und dissipiert. Ferner ist es speziell beim passiven Ausbalancieren so, dass die schwächste Zelle im Verbund die Gesamtkapazität bestimmt, indem sie beispielsweise den Abbruch eines Lade- oder Entladevorgangs erforderlich macht.

BMS mit aktiverer Ausbalancierung basieren in der Regel darauf, dass Energie durch Umladen zwischen den Zellen verschoben wird. Dieses Umladen geht jedoch stets mit einem Energieverlust einher und verringert zudem die Lebensdauer der Zellen.

Ferner ist es bei den herkömmlichen Systemen üblicherweise erforderlich, dass alle Zellen im System vom gleichen Typ sind und möglichst geringe Unterschiede in ihren elektrischen und physikalischen Eigenschaften aufweisen. Zudem wird in aktuellen Systemen typischerweise ein hoher technischer Schaltungs- und Filteraufwand betrieben, der den Energieverbrauch und die Kosten erhöht.

Ähnliche Probleme wie bei Batteriesystemen treten auch bei Energieumwandlungssystemen auf, die als Energieumwandlungselemente beispielsweise Brennstoffzellen oder Solarmodule umfassen. Auch bei derartigen Energieumwandlungssystemen werden eine Vielzahl von Zellen zur Erhöhung der Gesamtspannung in Reihe und zur Erhöhung der Ladung bzw. des Stromflusses parallel geschaltet.

WO 2012/07216882 zeigt ein elektrisches Umrichtersystem für Stromversorgungen, umfassend mindestens zwei gleichartige hintereinander geschaltete Einzelmodule, wobei jedes Einzelmodul mindestens vier interne Schaltelemente, mindestens ein Energiespeicherelement und mindestens vier Anschlüsse aufweist, wobei je zwei der Anschlüsse als ein erstes und ein zweites Klemmenpaar dienen; die internen Schaltelemente jedes Einzelmoduls so ausgeführt sind, dass sie wahlweise einen oder beide Anschlüsse jedes Klemmenpaars mit dem Energiespeicherelement verbinden können; die Hintereinanderschaltung von mindestens zwei Einzelmodulen so erfolgt, dass jeweils die Anschlüsse des zweiten Klemmenpaars eines vorhergehenden Einzelmoduls mit den Anschlüssen des ersten Klemmenpaars des jeweils nachfolgenden Einzelmoduls verbunden sind und mindestens eine Klemme des ersten Klemmenpaares des ersten Einzelmoduls der Hintereinanderschaltung und mindestens eine Klemme des zweiten Klemmenpaares des letzten Einzelmoduls der Hintereinanderschaltung als Klemmen der Hintereinanderschaltung dienen; und wobei die Schaltelemente der jeweiligen Einzelmodule in der Hintereinanderschaltung der mindestens zwei Einzelmodule ihre jeweiligen Energiespeicherelemente so mit den Klemmen der Hintereinanderschaltung verbinden, dass wahlweise eine Reihen- Oder Parallelschaltung der Energiespeicherelemente vorliegt.

Die DE 10 2011 089648 A1 offenbart eine Energiespeichervorrichtung zum Erzeugen einer n-phasigen Versorgungsspannung, wobei n eine ganze Zahl größer als 1 ist. Die Energiespeichervorrichtung umfasst n parallel geschaltete Energieversorgungszweige, welche jeweils mit mindestens einem Ausgangsanschluss der Energiespeichervorrichtung gekoppelt sind. Jeder Energieversorgungszweig hat eine Vielzahl von in Reihe geschalteten Energiespeichermodule, die jeweils eine Energiespeicherzelle, eine Koppeleinrichtung und ein zweites Koppelelement umfassen. Die Koppeleinrichtung dient dazu, das Energiespeicherzellenmodul selektiv in den jeweiligen Energieversorgungszweig zu schalten oder zu überbrücken. Das zweite Koppelelement dient dazu, benachbarte Energiespeicherzellenmodule parallel zueinander in den jeweiligen Energieversorgungszweig zu schalten. Über das zweite Koppelelement findet auch ein Ladungsaustausch zwischen Energiespeicherzellen benachbarter Module statt. Ein pulsbreitenmodulierter Taktbetrieb kann derart eingestellt werden, dass das Verhältnis der Ströme durch die Energiespeicherzellen zweier benachbarter Module ei-nen vorbestimmten Wert aufweist, welcher von den Ladungszuständen der Energiespeicher-zellen abhängig sein kann.

DE 10 2011 108 920 A1 beschreibt ein elektrisches Umrichtersystem für Stromversorgungen, welches aus einzelnen Modulen aufgebaut ist. Jedes der gleichartigen Module enthält einen Modul-Kondensator und kann über Schaltelemente so geschaltet werden, dass die Modul-Kondensatoren der Module in Serie oder parallel geschaltet werden können, oder dass ein Stromfluss durch die Module stattfindet, ohne den Modul-Kondensator zu laden oder zu entladen. Auf diese Weise kann die Spannung an den Klemmen des Umrichtersystems durch entsprechende Steuerung der Schaltelemente verlustarm in Stufen geschaltet werden. Vor einem Parallelschalten von Modul-Kondensatoren kann über einen Ladungsausgleich dieser Kondensatoren die Spannung angeglichen werden, so dass die entsprechenden Verluste minimiert werden.

### ZUSAMMENFASSUNG DER ERFINDUNG

Der Erfindung liegt die Aufgabe zugrunde, ein System zur Energiespeicherung oder Energieumwandlung anzugeben, das die oben genannten Probleme vermeidet.

Diese Aufgabe wird durch ein System nach Anspruch 1 und ein Verfahren, ein Herstellungsverfahren für ein solches System nach Anspruch 11 und ein Verfahren zum Bereitstellen einer gewünschten Spannung oder einer Phase einer gewünschten Spannung nach Anspruch 13 gelöst. Vorteilhafte Weiterbildungen sind in den abhängigen Ansprüchen angegeben.

Erfindungsgemäß wird ein modulares Energiespeicher-Direktumrichtersystem angegeben, das mindestens einen Brückenzweig umfasst, der eine Mehrzahl von hintereinander geschalteten Modulen umfasst. Dabei umfasst jedes der genannten Module
- zwei erste Anschlüsse und zwei zweite Anschlüsse,
- ein Speicherelement für elektrische Energie, insbesondere eine Batterie, oder ein Energieumwandlungselement, und
- genau vier Schalter,
wobei bei jeweils zwei benachbarten Modulen aus den genannten Modulen die ersten Anschlüsse des einen Moduls direkt oder über eine dazwischengeschaltete Komponente mit den zweiten Anschlüssen des anderen Moduls verbunden sind.

Das System umfasst ferner eine Steuereinrichtung, die dazu eingerichtet ist, Informationen bezüglich des aktuellen Ladezustandes der Speicherelemente bzw. bezüglich der Spannung oder Leistung der Energieumwandlungselemente zu erhalten, und die geeignet ist, zumindest einen Teil der genannten Mehrzahl von Schaltern in Abhängigkeit von dem aktuellen Ladezustand der Speicherelemente bzw. der aktuellen Leistung oder Spannung der Energieumwandlungselemente in einem Energieabgabemodus derart anzusteuern, dass der Brückenzweig als Ganzes eine gewünschte Spannung oder eine Phase einer gewünschten Spannung liefert.

Dabei sind die genannten Module so ausgelegt und ansteuerbar, dass
- das Speicherelement bzw. Energieumwandlungselement eines Moduls wahlweise deaktiviert werden kann, und
- die Speicherelemente bzw. Energieumwandlungselemente von zwei Modulen, die durch mindestens ein dazwischenliegendes Modul mit deaktiviertem Speicherelement/Energieumwandlungselement getrennt sind, wahlweise parallel und in Reihe schaltbar sind,
   wobei das Speicherelement/Energieumwandlungselement eines Moduls zwei Pole hat und in Reihe mit einem ersten Schalter zwischen die beiden ersten Anschlüsse des Moduls geschaltet ist, sodass einer der Pole des Speicherelements/Energieumwandlungselements durch den ersten Schalter vom Rest des Moduls abkoppelbar ist,
   wobei die genau vier Schalter ferner folgendes umfassen:
      - einen zweiten Schalter mit einem ersten Ende, welches mit einem der zweiten Anschlüsse des Moduls verbunden ist, und einem zweiten Ende, welches mit einem der ersten Anschlüsse des Moduls verbunden ist,
      - einen dritten Schalter mit einem ersten Ende, welches mit dem anderen der zweiten Anschlüsse des Moduls verbunden ist, und einem zweiten Ende, welches mit dem anderen der ersten Anschlüsse des Moduls verbunden ist, und
   - einen vierten Schalter, der in einer Verbindungsleitung vorgesehen ist, die das erste Ende des zweiten Schalters mit dem zweiten Ende des dritten Schalters verbindet, wobei das Speicherelement/Energieumwandlungselement und der erste Schalter zwischen das zweite Ende des zweiten Schalters und das zweite Ende des dritten Schalters geschaltet sind.

Bei dem System der Erfindung handelt es sich um ein "modulares" System, weil es eine Vielzahl von hintereinander geschalteten Module umfasst, wobei jedes der genannten hintereinander geschalteten Modulen entweder ein Speicherelement für elektrische Energie, beispielsweise eine Batterie, oder ein Energieumwandlungselement, beispielsweise eine Solarzelle oder eine Brennstoffzelle umfasst, das chemische bzw. Lichtenergie in elektrische Energie umwandeln kann. Es ist möglich, dass dasselbe System sowohl Speicherelemente für elektrische Energie als auch Energieumwandlungselemente umfasst. Tatsächlich kann sogar ein einzelnes Modul sowohl ein Speicherelement also auch ein Energieumwandlungselement enthalten. Es sind aber auch Ausführungen denkbar, in denen nur Speicherelemente, also beispielsweise Batterien oder Batteriezellen, vorhanden sind. Schließlich ist es auch denkbar, dass das System ausschließlich Energieumwandlungselemente enthält. Da aber die Hauptanwendungen des Systems Fälle betreffen, in denen mindestens ein Speicherelement für elektrische Energie vorgesehen ist, wird das System als "Energiespeichersystem" bezeichnet, wobei hierunter im Sprachgebrauch der vorliegenden Offenbarung auch der Spezialfall enthalten sein soll, dass das System lediglich Energieumwandlungselemente umfasst.

Schließlich handelt es sich insofern um ein "Direktumrichtersystem", als das System dazu eingerichtet ist, zumindest einen Teil der genannten Mehrzahl von Schaltern in Abhängigkeit von dem aktuellen Ladezustand der Speicherelemente bzw. der aktuellen Leistung oder Spannung der Energieumwandlungselemente in einem Energieabgabemodus derart anzusteuern, dass der Brückenzweig als Ganzes bereits eine gewünschte Spannung oder eine Phase einer gewünschten Spannung liefert, so dass kein weiterer Umrichter mehr benötigt wird.

Man beachte, dass Module mit der Möglichkeit zur dynamischen Reihen- und Parallelschaltung von Einzelmodulen bereits in der WO2012/072168 A2 offenbart wurden, dort jedoch im Zusammenhang mit einer Multilevelkonvertertopologie. Anders als bei dem Multilevelkonverter ist bei der Erfindung aber vorgesehen, dass ein Speicherelement bzw. Energieumwandlungselement eines Moduls wahlweise deaktiviert werden kann, und dass die Speicherelemente bzw. Energieumwandlungselemente von zwei Modulen, die durch mindestens ein dazwischenliegendes Modul mit deaktiviertem Speicherelement/Energieumwandlungselement getrennt sind, wahlweise parallel und in Reihe schaltbar sind.

Durch die Möglichkeit, nicht nur benachbarte Module, sondern auch solche Module, die lediglich durch deaktivierte Module getrennt sind, wahlweise sowohl in Reihe als auch parallel zu schalten, lassen sich die eingangs genannten Probleme im Stand der Technik auf elegante und kostengünstige Weise vermeiden.

Wie unten anhand von Ausführungsbeispielen näher ersichtlich wird, wird zur Abgabe von Energie kein Umladen zwischen Speicherelementen benötigt. Stattdessen ist es möglich, die Speicherelemente oder Energieumwandlungselemente im Energieabgabemodus derart zu verschalten, dass der Brückenzweig als Ganzes bereits eine gewünschte Spannung oder eine Phase einer gewünschten Spannung liefert, also kein weiterer Umrichter benötigt wird, gleichzeitig aber eine Ausbalancierung der Ladung zwischen einzelnen Speicherelementen/Energieumwandlungselementen durch Umladen vermieden werden kann. Hierzu ist es von entscheidender Bedeutung, dass einzelne Module wahlweise deaktiviert werden können, beispielsweise weil sie nicht den momentan benötigten Ladungszustand aufweisen, und zugeschaltet werden können, wenn ihr aktueller Ladungs-, Spannungs- oder Leistungszustand zu der gewünschten Energieabgabe "passt". Insbesondere kann eine Gruppe von benachbarten Modulen sowohl beim Laden als auch dem Entladen nacheinander zeitgesteuert derart parallel geschaltet werden, dass trotz anfänglich unterschiedlicher Ladezustände kein Ladungstransfer zwischen Modulen benötigt wird, wie unten anhand von Ausführungsbeispielen näher erläutert wird.

Ferner gestattet das modulare Energiespeicher-Direktumrichtersystem die Verwendung von Speicherelementen/Energieumwandlungssystemen unterschiedlichen Typs oder auch unterschiedlichem Alterungszustandes, ohne dass dies automatisch zu einer Verminderung der Leistungsfähigkeit oder einem Verlust an Effizienz führt.

In einer vorteilhaften Weiterbildung ist die Steuereinrichtung geeignet, in einem Lademodus zumindest einen Teil der genannten Mehrzahl von Schaltern in Abhängigkeit von dem aktuellen Ladezustand der Speicherelemente bzw. der aktuellen Leistung oder Spannung der Energieumwandlungselemente anzusteuern, um zumindest einen Teil der Speicherelemente durch eine externe am Brückenzweig anliegende AC- oder DC-Spannung aufzuladen. Demgemäß wird kein zusätzlicher Ladeumrichter verwendet, wie er beispielsweise gegenwärtig bei Elektroautos benötigt wird. Das System der Erfindung kann im Grunde durch beliebige externe Spannungen effizient aufgeladen werden. Dies hat beispielsweise bei der Verwendung in Elektroautomobilen einen großen Vorteil, weil kein zusätzlicher Ladeumrichter im Fahrzeug vorhanden sein muss bzw. weil keine Ladestationen mit einem solchen Ladeumrichter benötigt werden, was die Flexibilität enorm erhöht. Stattdessen kann das Elektroauto z. B. wahlweise mit Drehstrom mit einer effektiven Spannung von 400 V oder mit 230 V Wechselspannung geladen werden, je nach Verfügbarkeit.

Erfindungsgemäß ist einer der Pole des Speicherelements/Energieumwandlungselements durch einen zugehörigen Schalter vom Rest des Moduls abkoppelbar.

Das erfindungsgemäße Modul ist so ausgelegt, dass es nur in zwei Quadranten der Strom-Spannungsebene betrieben werden kann. Es kann eine Zusatzschaltung vorgesehen sein, durch die eine Kette von hintereinander geschalteten Zwei-Quadranten-modulen als Ganzes umgepolt werden können.

In einer vorteilhaften Ausführungsform sind die mindestens zwei äußeren Anschlüsse in dem ersten und/oder letzten Modul des Brückenzweigs miteinander verbunden.

Das Energiespeicher-Direktumrichtersystem der Erfindung kann zwei, drei, vier, fünf oder mehr Brückenzweige enthalten. An den Orten, wo die Brückenzweige aneinanderstoßen, können die Phasen einer gewünschten Spannung abgegriffen werden.

In einer vorteilhaften Ausführungsform sind die mindestens zwei äußeren Anschlüsse im ersten und/oder letzten Modul eines Brückenzweiges separat mit mindestens zwei äußeren Anschlüssen eines Moduls eines angrenzenden Brückenzweigs verbunden.

In einer vorteilhaften Weiterbildung sind zwei, drei, vier, fünf oder mehr Brückenzweige in einer Sterntopologie oder in einer Ringtopologie miteinander verschaltet.

In einer besonders vorteilhaften Ausführungsform sind die zwei, drei, vier, fünf oder mehr Brückenzweige derart in einer Ringtopologie verschaltet, dass die mindestens zwei äußeren Anschlüsse eines jeden Brückenzweiges separat mit den mindestens zwei äußeren Anschlüssen des angrenzenden Brückenzweiges verbunden sind, und ist die Steuereinrichtung dazu eingerichtet, zumindest einen Teil der genannten Mehrzahl von Schalten so anzusteuern, dass mindestens zwei voneinander unabhängige Ringströme durch den Ring aus Brückenzweigen fließen können. Hierbei kann beispielsweise der eine Ringstrom zum Ausgleich einer Asymmetrie eines entsprechenden mehrphasigen Netzes genutzt werden. Beispielsweise sind die drei Ströme eines dreiphasigen Netzes auf Grund einer unsymmetrischen Last vom Betrag her nicht gleich groß. Der Ringstrom der Ringtopologie ermöglicht hierbei einen Leistungstransfer der Phasen untereinander in der Weise, dass die Ströme aus Sicht der Quelle betragsgleich erscheinen. Der zweite Ringstrom kann zum Ausgleich der Ladungszustände einzelner Speicher-/Energieumwandlungselemente - auch über die Phasen des Direktumrichters hinweg - genutzt werden.

In einer vorteilhaften Weiterbildung können innerhalb des mindestens einen Brückenzweigs, insbesondere innerhalb eines Moduls oder zwischen benachbarten Modulen Induktivitäten vorgesehen sein. Diese Induktivitäten können dazu dienen, Stromspitzen beim Umschalten der Spannung zu reduzieren.

Vorzugsweise sind die genannten Schalter zumindest überwiegend durch MOS-FETs, IGBTs, IGCTs oder Thyristoren gebildet.

Die Speicherelemente können durch eines oder mehrere der folgenden Elemente gebildet sein:
- einen Kondensator,
- eine Batteriezelle, insbesondere eine Second-Use-Zelle oder
- eine Redox-Flowzelle.

Die genannten Energieumwandlungselemente können durch Solarzellen, Brennstoffzellen oder Thermoelemente gebildet sein.

In einer vorteilhaften Weiterbildung umfasst zumindest ein Teil der genannten Module ein Speicherelement und zumindest ein Teil der Module ein Energieumwandlungselement. Ein solches System ist beispielsweise vorteilhaft, wenn Solarzellen als Energieumwandlungselemente verwendet werden. Mit einem solchen System kann auch bei schwankender Sonneneinstrahlung stets eine gewünschte Spannung oder Phase einer gewünschten Spannung abgegeben werden. Wenn die durch die Solarzellen erzeugte Leistung die abgegriffene Leistung übersteigt, kann die überschüssige Energie zum Laden der Speicherelemente verwendet werden. Umgekehrt können zu Zeiten geringerer Sonneneinstrahlung die Solarzellen durch die Speicherelemente unterstützt werden, so dass gleichwohl die erforderliche Leistung abrufbar ist.

Das System der Erfindung gestattet allerdings nicht nur Speicherelemente und Energieumwandlungselemente in demselben Energiespeicher-Direktumrichtersystem zu kombinieren. Ein besonderer Vorteil liegt auch darin, dass in dem System der Erfindung Speicherelemente unterschiedlichen Typs oder mit unterschiedlichen Alterungsgraden bzw. "state of health" ihrer Leistungsfähigkeit entsprechend optimal eingesetzt und miteinander kombiniert werden können. In einer vorteilhaften Ausführungsform hat daher ein Teil der Module Speicherelemente eines ersten Typs und ein anderer Teil der Module Speicherelemente eines zweiten Typs, der von dem ersten Typ verschieden ist, wobei sich der erste Typ und der zweite Typ insbesondere in einem oder mehreren der folgenden Merkmale unterscheiden:
- Ladezeit,
- Innenwiderstand, und
- Kapazität.

Dies ist ein bedeutender Vorteil gegenüber herkömmlichen Batteriesystemen, bei denen die verwendeten Zellen stets annähernd gleichartig sein müssen und Abweichungen in der Regel zulasten der Effizienz oder der Kapazität gehen. Die Möglichkeit, Speicherelemente unterschiedlichen Typs oder mit unterschiedlichen Eigenschaften zu kombinieren hat eine Vielzahl von praktischen Vorteilen. Beispielsweise können Speicherelemente für unterschiedliche Zwecke vorgesehen sein, um unter unterschiedlichen Bedingungen unterschiedlichen Anforderungen gerecht zu werden. Beispielsweise können Speicherelemente vorgesehen sein, die ausgesprochen schnell ladefähig sind, und Zellen vorgesehen sein, die eine ausgesprochen große Kapazität haben, aber dafür weniger schnell geladen werden können.

Weiterhin ist es von Vorteil, dass Unterschiede durch Alterungsprozesse, die bei unterschiedlichen Exemplaren desselben Typs oft unterschiedlich schnell voranschreiten, nicht zu einer grundsätzlichen Beeinträchtigung des Systems führen, und daher in sehr großem Umfang toleriert werden können. Insofern können die Speicherelemente wesentlich länger verwendet werden, als in herkömmlichen Batteriesystemen.

Tatsächlich finden sogar sog. Second-Use-Batterien, die für andere Anwendungen bereits aussortiert werden mussten, im System der Erfindung sinnvolle Verwendung. Insofern kann es sehr kostengünstig mit gebrauchten Speicherelementen aufgebaut oder ergänzt werden, für die andernfalls kaum Verwendung bestünde. Aufgrund des modularen Aufbaus ist das System zudem leicht mit gebrauchten Speicherelementen erweiterungs- und ergänzungsfähig.

Schließlich ist es auch möglich, dass zumindest ein Teil der Module sowohl ein Speicherelement als auch ein Energieumwandlungselement enthält, wie eingangs bereits erwähnt wurde.

In einer vorteilhaften Ausführungsform ist die Steuereinrichtung geeignet, Gruppen von Modulen zu bestimmen, deren Speicherelemente parallel zu schalten sind, wobei die Steuereinrichtung dazu eingerichtet ist, zumindest einen Teil der genannten Mehrzahl von Schaltern in Abhängigkeit von dem aktuellen Ladezustand der Speicherelemente derart anzusteuern, dass vor dem Parallelschalten der Module 14 der Gruppe die Spannungen oder Ladezustände der Module angeglichen werden, indem während eines Ladevorgangs Module 14, oder Moduluntergruppen, die eine geringere Spannung bzw. einen geringeren Ladezustand aufweisen, bevorzugt geladen werden, und/oder während eines Energieabgabemodus Module 14 oder Moduluntergruppen, die eine hohe Spannung bzw. einen hohen Ladezustand aufweisen, bevorzugt entladen werden.

Auf diese Weise können die Ladezustände der Module angeglichen werden, ohne dass Ladung von einem Modul zu einem anderen Modul umgeladen werden müsste, was unvermeidlich zu Verlusten führen würde. Damit kann erreicht werden, dass sämtliche Speicherelemente in einem erfindungsgemäßen System zu jedem Zeitpunkt sehr ähnliche Ladezustände aufweisen. Damit bestimmt nicht - wie bei bisherigen Batteriesystemen - diejenige Zelle mit der geringsten Kapazität die beiden Gesamtladezustände "voll" oder "leer"; stattdessen kann die entsprechende Gesamtkapazität eines solchen Systems wesentlich besser genutzt werden.

In einer weiteren vorteilhaften Ausführungsform ist die Steuereinrichtung dazu eingerichtet, die Kapazität des Speicherelementes eines Moduls zu bestimmen, indem das Speicherelement im laufenden Betrieb des Systems vollständig geladen und vollständig entladen wird und die Energie, welche in das bzw. aus dem Speicherelement fließt, erfasst wird.

Schließlich ist die Steuerungseinrichtung vorzugsweise geeignet, fehlerhafte Module durch Überprüfung zu identifizieren, wobei die Überprüfung eines oder mehrere der folgenden Kriterien beinhaltet:
- Ist das Speicherelement defekt?
- Ist das Speicherelement kurzgeschlossen oder offen?
- Ist ein Bypassmodus möglich?
- Welche Schaltzustände sind noch möglich?

In einer vorteilhaften Ausführungsform ist die Steuereinrichtung dazu eingerichtet, zumindest einen Teil der Schalter derart anzusteuern, dass das System eine Netzspannung, insbesondere eine drei-phasige Netzspannung von 1000 V oder weniger, vorzugsweise von ungefähr 400 V ausgibt.

Ein besonders vorteilhafter Anwendungsfall hierfür sind Solaranlagen, bei denen die Solarzellen bzw. Solarzellenmodule die Energieumwandlungselemente bilden, und die durch die Solarzellen erzeugten Spannungen direkt in eine Netzspannung umgerichtet werden können. Wenn das Aufkommen an Solarenergie den aktuellen Verbrauch übersteigt, kann die zusätzliche Energie, wie oben beschrieben, in zusätzlich vorgesehenen Speicherelementen gespeichert werden und dann zu Zeiten, in denen der Strombedarf das Aufkommen der Solarzellen übersteigt, als Netzspannung aus dem System entnommen werden.

Die Erfindung betrifft ferner einen elektrischen Antrieb für ein Fahrzeug, der ein modulares Energiespeicher-Direktumrichtersystem nach einer der zuvor beschriebenen Ausführungsformen umfasst. Wie eingangs erwähnt, wird für diesen Fall kein zusätzlicher Umrichter für den Motorbetrieb und auch kein Ladeumrichter benötigt. Ferner kommen gerade bei elektromobilen Anwendungen die Vorteile des Systems, nämlich eine erhöhte Energieeffizienz, Schonung der Batteriezellen und die Fähigkeit, dass die Minderung einzelner Zellen keinen Einfluss auf das Leistungsverhalten der weiteren Zellen im Verbund hat, besonders zum Tragen.

### KURZBESCHREIBUNG DER FIGUREN

- Fig. 1: ist eine schematische Darstellung eines Energiespeicher-Direktumrichtersystems nach einer Ausführungsform der Erfindung mit einem einzigen Brückenzweig.
- Fig. 2: ist eine schematische Darstellung eines Energiespeicher-Direktumrichtersystems mit zwei Brückenzweigen und drei externen Anschlüssen zum Erzeugen von drei Spannungsphasen.
- Fig. 3a, b: zeigen Energiespeicher-Direktumrichtersysteme mit drei Brückenzweigen, die in einer Sterntopologie angeordnet sind, wobei jedes Modul zwei erste und zwei zweite Anschlüsse hat.
- Fig. 4: zeigt ein Energiespeicher-Direktumrichtersystem mit drei Brückenzweigen, die in einer Sterntopologie angeordnet sind, wobei jedes Modul drei erste und drei zweite Anschlüsse hat.
- Fig. 5: ist eine schematische Darstellung eines Energiespeicher-Direktumrichtersystems mit einer Ringtopologie.
- Fig. 6: zeigt eine Hintereinanderschaltung von Modulen mit zusätzlichen Induktivitäten.
- Fig. 7-12: zeigen Vier-Quadranten-Module mit zwei ersten und zwei zweiten Anschlüssen.
- Fig. 13-18: zeigen Vier-Quadranten-Module mit drei ersten und drei zweiten Anschlüssen.
- Fig. 19-20: zeigen Zwei-Quadranten-Module mit zwei ersten und zwei zweiten Anschlüssen.
- Fig. 21-22: zeigen Zwei-Quadranten-Module mit drei ersten und drei zweiten Anschlüssen sowie mit einer zusätzlichen Schaltung zum Umpolen einer Hintereinanderschaltung solcher Module.
- Fig. 23: ist ein Flussdiagramm, welches die Erzeugung eines gewünschten Spannungslevels veranschaulicht.
- Fig. 24: ist ein Flussdiagramm eines Prozesses, in dem fehlerhafte Module identifiziert werden.
- Fig. 25: ist ein Flussdiagramm eines Prozesses, nach dem Module mit Spannungsdifferenzen in ihrer Spannung angeglichen und parallelgeschalte werden.
- Fig. 26: ist ein Flussdiagramm, das die Überprüfung der Kapazität eines Moduls im laufenden Betrieb veranschaulicht.

### BESCHREIBUNG DER BEVORZUGTEN AUSFÜHRUNGSFORM

Zum besseren Verständnis der vorliegenden Erfindung wird im Folgenden auf das in den Zeichnungen dargestellte bevorzugte Ausführungsbeispiel Bezug genommen, das anhand spezifischer Terminologie beschrieben ist. Es sei jedoch darauf hingewiesen, dass der Schutzumfang der Erfindung dadurch nicht eingeschränkt werden soll, da derartige Veränderungen und weitere Modifizierungen an der gezeigten Vorrichtung und dem Verfahren sowie derartige weitere Anwendungen der Erfindung, wie sie darin aufgezeigt sind, als übliches derzeitiges oder künftiges Fachwissen eines zuständigen Fachmanns angesehen werden.

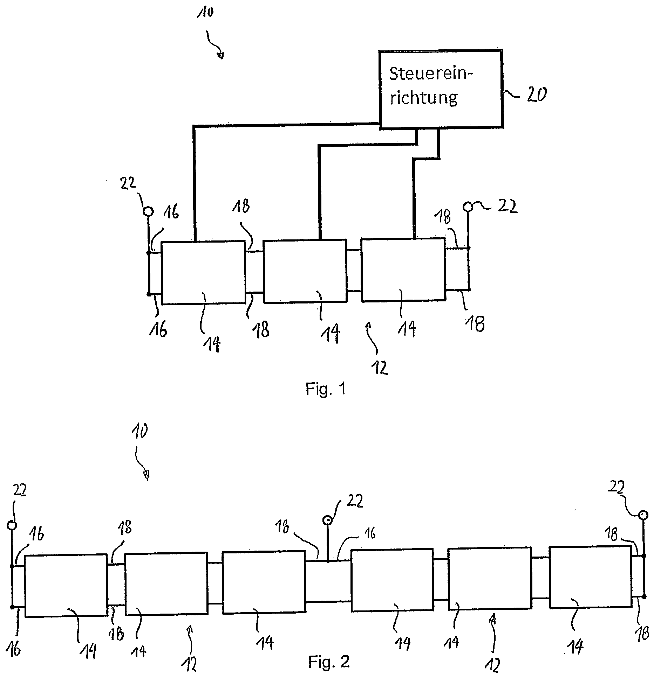

Fig. 1 zeigt ein Ausführungsbeispiel eines modularen Energiespeicher-Direktumrichtersystems 10 nach einer Ausführungsform der Erfindung. Das System 10 umfasst einen Brückenzweig 12, der eine Mehrzahl von hintereinander geschalteten Modulen 14 umfasst. Der Einfachheit halber sind in Fig. 1 lediglich drei hintereinander geschaltete Module 14 gezeigt, es versteht sich jedoch, dass die Anzahl an Modulen 14 in einem Brückenzweig 12 in praktischen Anwendungen wesentlich größer sein wird und durchaus über 100, in manchen Anwendungen über 1000 und sogar mehrere 1000 betragen kann. Jedes der Module 14 hat zwei erste Anschlüsse 16 und zwei zweite Anschlüsse 18, die in der Darstellung von Fig. 1 lediglich für das Modul 14 ganz links im Brückenzweig gezeigt sind. Bei jeweils zwei benachbarten Modulen 14 sind die ersten Anschlüsse 16 des einen Moduls direkt mit den zweiten Anschlüssen 18 des benachbarten Moduls verbunden. Anstelle einer direkten Verbindung, wie sie in Fig. 1 gezeigt ist, können jedoch Anschlüsse benachbarter Module auch indirekt über eine dazwischengeschaltete Komponente verbunden sein.

Jedes der Module 14 enthält ein Speicherelement für elektrische Energie, insbesondere eine Batterie, oder ein Energieumwandlungselement (in Fig. 1 nicht gezeigt), und eine Mehrzahl von Schaltern (in Fig. 1 nicht gezeigt). Unter Batterie kann dabei wiederum eine einzelne Zelle bzw. eine Parallel- und/oder Reihenschaltung von Zellen eines Akkumulators verstanden werden. Eine Vielzahl von möglichen Ausführungsformen für den inneren Aufbau der Module 14 werden unten im Detail gezeigt.

Schließlich umfasst das System 10 von Fig. 1 eine Steuerung 20, die dazu eingerichtet ist, Informationen bezüglich des aktuellen Ladezustandes der Speicherelemente (nicht gezeigt) bzw. bezüglich der Spannung oder Leistung der Energieumwandlungselemente (nicht gezeigt) zu erhalten. Ferner ist die Steuereinrichtung 20 geeignet, zumindest einen Teil der genannten Mehrzahl von Schaltern in Abhängigkeit von dem aktuellen Ladezustand der Speicherelemente bzw. der aktuellen Leistung oder Spannung der Energieumwandlungselemente in einem Energieabgabemodus derart anzusteuern, dass der Brückenzweig 12 als Ganzes eine gewünschte Spannung zwischen seinen Endanschlüssen 22 liefert. An den Endanschlüssen 22 werden in dem Ausführungsbeispiel von Fig. 1 die ersten Anschlüsse 16 des am weitesten links stehenden Moduls 14 und die zweiten Anschlüsse 18 des am weitesten rechts stehenden Moduls 14 zusammengeführt, und die anliegende Spannung wird abgegriffen. Die in Fig. 1 dargestellten Verbindungen von der Steuereinrichtung 20 zu den einzelnen Modulen 14 sind symbolisch zu verstehen. Es kann sich hierbei um jeweils eine oder mehrere Leitungen zu den Modulen 14 handeln oder um eine Funkverbindung; weiterhin kann die Steuereinrichtung 20 auch über einen Datenbus mit einem oder mehreren Modulen verbunden sein, so dass Steuerinformationen über den Datenbus zu weiteren Modulen weitergereicht werden können. Die Steuereinrichtung 20 kann die Mehrzahl von Schaltern, auch in einem Ladezustand so ansteuern, dass eine Energieaufnahme bei gegebenem Spannungsniveau an den Endanschlüssen 22 möglich ist.

Wie unten anhand konkreter Ausführungsbeispiele im Detail erläutert wird, sind die Module 14 so ausgelegt, und ansteuerbar, dass
- das Speicherelement bzw. Energieumwandlungselement eines Moduls 14 wahlweise deaktiviert werden kann, und
- dass die Speicherelemente bzw. Energieumwandlungselemente von zwei Modulen 14, die durch mindestens ein dazwischenliegendes Modul 14 mit deaktiviertem Speicherelement/Energieumwandlungselement getrennt sind, wahlweise parallel und in Reihe schaltbar sind.

In diesem Zusammenhang bedeutet das "Deaktivieren" eines Speicherelements/Energieumwandlungselementes, das das betreffende Element nicht am Energieabgabeprozess oder einem Ladeprozess beteiligt ist. Durch die Fähigkeit, einzelne deaktivierte Module 14 zu "überspringen" und gleichwohl solche Module 14, die durch deaktivierte Module getrennt sind, wahlweise parallel und in Reihe zu schalten, können quasi beliebige Spannungsverläufe als Ausgabe an den Anschlüssen 22 erzeugt werden, und das System 10 kann durch praktisch beliebige, an den äußeren Anschlüssen 22 anliegende Spannungen, egal ob DC oder AC, geladen werden, und zwar in beiden Fällen so, dass ein verlustbehaftetes Umladen zwischen den Modulen 14 vermieden werden kann. Man beachte, dass in der folgenden Beschreibung die Begriffe "Parallel-" bzw. "Reihenschaltung" von Modulen bedeuten sollen, dass die betreffenden Speicherelemente für elektrische Energie bzw. Energieumwandlungselemente parallel- bzw. in Reihe geschaltet sind.

Fig. 2 zeigt eine Ausführungsform eines weiteren Systems 10, welches zwei Brückenzweige 12 mit insgesamt drei äußeren Anschlüssen 22 umfasst. An den äußeren Anschlüssen 22 können beispielsweise drei Phasen einer Spannung abgegriffen werden. Man beachte, dass ähnlich wie in der Ausführungsform von Fig. 1 an dem linken äußeren Anschluss 22 die ersten Anschlüsse 16 des angrenzenden Moduls 14 zusammengeführt sind, und dass an dem rechten äußeren Anschluss 22 die beiden zweiten Anschlüsse 18 des angrenzenden Moduls 14 ebenfalls zusammengeführt sind. In der Ausführungsform von Fig. 2 ist der Ausgang 22 zwischen den beiden Brückenzweigen 12 jedoch nur mit jeweils einem ersten bzw. zweiten Ausgang der angrenzenden Module 14 verbunden. Auf diese Weise wird ein zusätzlicher Strompfad in dem Gesamtsystem gebildet, wodurch sich die Anzahl der Freiheitsgrade und die Operationsmöglichkeiten erhöhen. Es wäre aber auch möglich, die ersten bzw. zweiten Anschlüsse 16, 18 der angrenzenden Module 14 am mittleren Anschluss 22 zusammenzuführen.

Man beachte, dass das modulare Energiespeicher-Direktumrichtersystem 10 von Fig. 2, ebenso wie die weiteren nachstehend beschriebenen Systeme, gleichfalls über eine Steuereinrichtung 20 verfügt, die Informationen bezüglich der Ladezustände, Spannungen oder Leistungen empfängt und die Schalter der Module 14 entsprechend ansteuert, die aber in den folgenden Abbildungen der Einfachheit halber nicht mehr gezeigt ist.

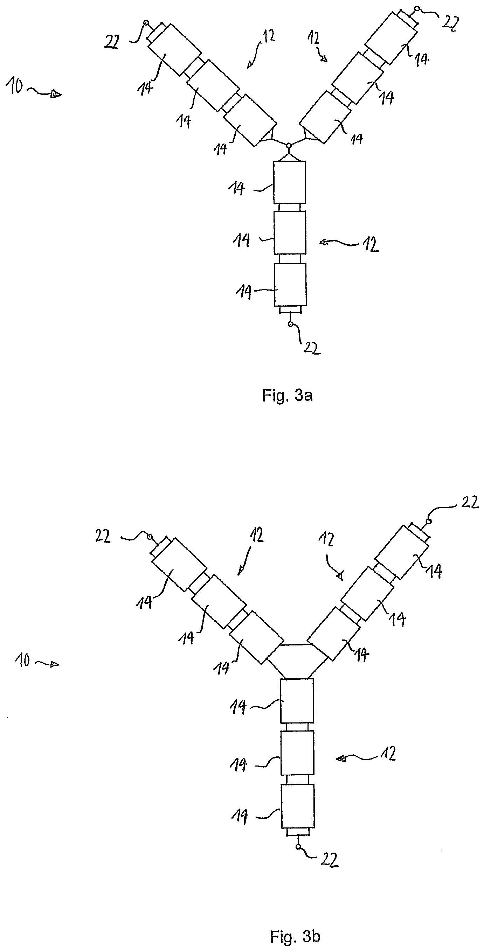

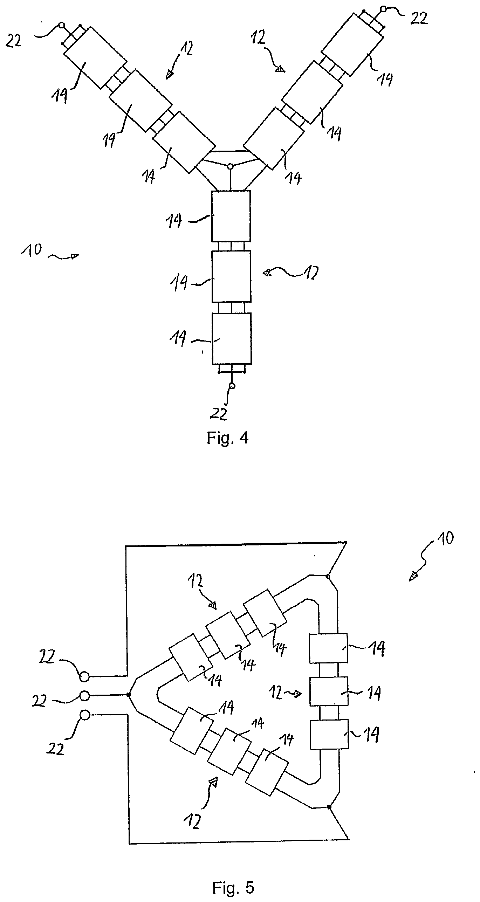

Fig. 3a zeigt ein weiteres Ausführungsbeispiel eines modularen Energiespeicher-Direktumrichtersystems 10, das drei Brückenzweige 12 enthält, die in einer Sternstruktur angeordnet sind. An den jeweils außenliegenden äußeren Anschlüssen 22 der Brückenzweige 12 können drei Phasen abgegriffen werden. Die Anschlüsse der jeweils innenliegenden Module 14 werden im topologischen Mittelpunkt des Systems zusammengeführt. Sie können aber auch, wie in der Abwandlung von Fig. 3b gezeigt ist, separat mit jeweils einem zugehörigen Anschluss eines innenliegenden Moduls 14 eines anderen Brückenzweiges verbunden werden. Schließlich zeigt Fig. 4 eine weitere Variante, bei der jedes Modul 14 drei erste und drei zweite Anschlüsse hat. Von den jeweils drei innenliegenden Anschlüssen der innenliegenden Module 14 wird in der Ausführungsform von Fig. 4 einer verbunden, während die anderen beiden Anschlüsse separat mit Anschlüssen eines innenliegenden Moduls 14 eines anderen Brückenzweiges 12 verbunden ist.

Man beachte, dass im Betrieb nicht sämtliche Phasen des Systems 10 benutzt werden müssen. Beispielsweise kann jedes der in Fig. 2 - 4 gezeigten dreiphasigen Systeme 10 auch über einen Ein-Phasen-Wechselstrom oder sogar über Gleichstrom an nur zwei Anschlüssen 22 geladen und entladen werden. Es wäre also beispielsweise möglich, das System 10 mit 230 V-Wechselstrom zu laden, im Betrieb aber 400 V-Drehstrom abzugeben. Im konkreten Anwendungsfall der Elektromobilität würde dies z.B. bedeuten, dass ein Elektrofahrzeug wahlweise mit 230 V-Wechselstrom oder 400 V Drehstrom geladen werden könnte, je nach Verfügbarkeit.

Man beachte, dass die in Fig. 3a - 4 gezeigte Sterntopologie sich auf eine beliebige Anzahl von Phasen abwandeln lässt, indem weitere Brückenzweige 12 in die Sternstruktur eingefügt werden.

Fig. 5 zeigt ein weiteres Energiespeicher-Direktumrichtersystem 10, bei dem drei Brückenzweige 12 in einer Ringstruktur angeordnet sind. In dem gezeigten Ausführungsbeispiel werden die Anschlüsse der Module 14, die an den inneren Enden der Brückenzweige 12 liegen, nicht zusammengeführt, obwohl dies in einer alternativen Ausführungsform gleichwohl möglich wäre. Der Vorteil der in Fig. 5 gewählten Topologie besteht darin, dass zwei kontrollierte und voneinander unabhängige Ringströme geführt werden können, wobei der eine Ringstrom beispielsweise zum Ausgleich einer Asymmetrie des entsprechenden mehrphasigen Netzes genutzt werden kann, während der zweite Ringstrom zum Ausgleich der Ladungszustände einzelner Energiewandlungs-bzw. Speicherelemente - auch über die Phasen des Systems 10 hinweg - genutzt werden kann. Auch für das in Fig. 5 gezeigte Energiespeicher-Direktumrichtersystem 10 gilt, dass auch hier eine Ladung oder Entladung über nur zwei der drei Abgriffe 22 mit Wechselstrom oder Gleichstrom erfolgen kann. Weiterhin lässt sich auch hier die Topologie auf eine beliebige Phasenzahl erweitern. Weiterhin ist anzumerken, dass auch bei Ausfall eines ganzen Brückenzweiges 12 die Funktionsfähigkeit zur Erzeugung eines entsprechenden mehrphasigen Spannungssystems erhalten bleibt. Lediglich die Erzeugung des zweiten Ringstroms für Ausgleichsvorgänge wird in einem solchen Fall unterbrochen.

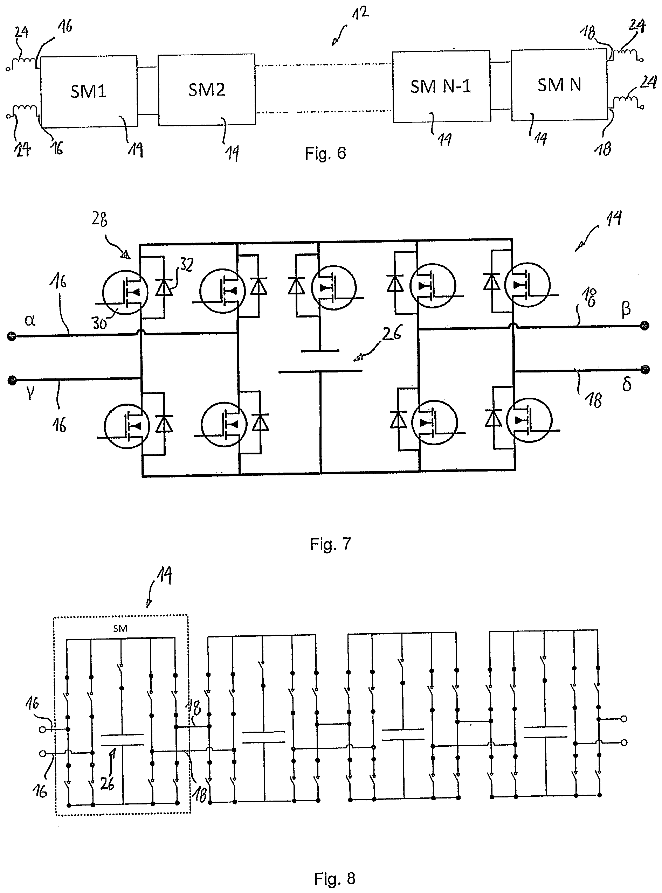

Fig. 6 zeigt schematisch einen Brückenzweig 12 mit einer Anzahl N von hintereinander geschalteten Modulen, die durch "SM" (Schaltmodul) gekennzeichnet sind. An den ersten Anschlüssen 16 des ersten Moduls bzw. den zweiten Anschlüssen 18 des Nten Moduls sind jeweils Induktivitäten 24 vorgesehen, die dazu bestimmt sind, Spannungsspitzen abzudämpfen. Derartige Induktivitäten 24 könnten auch zwischen den Modulen 14 oder innerhalb der Module 14 vorgesehen sein.

### Aufbau der Module

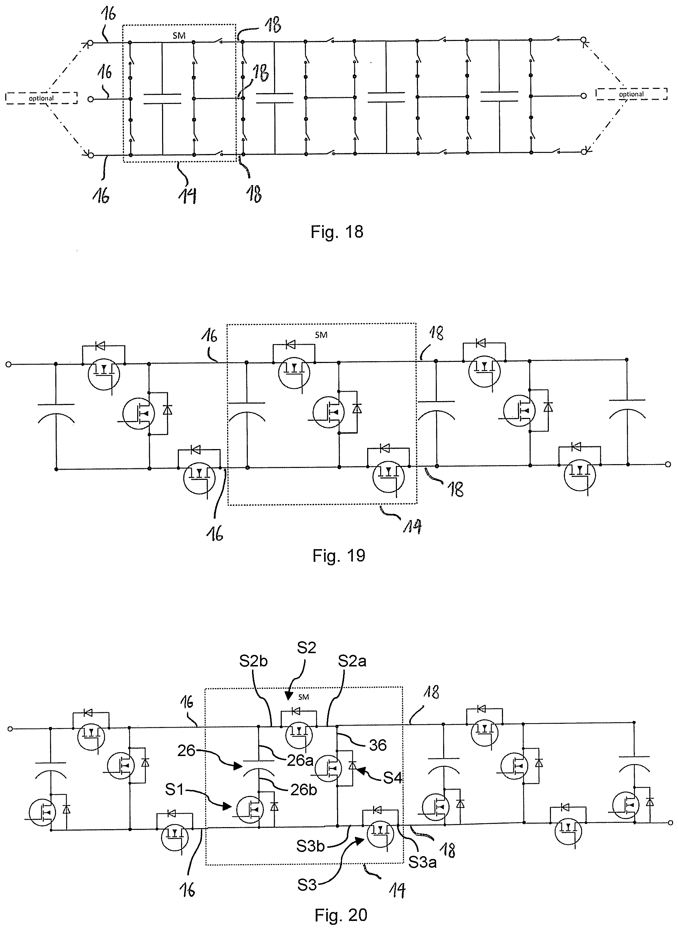

Im Folgenden wird unter Bezugnahme auf Figuren 7 bis 22 eine Vielzahl von Modulen 14 vorgestellt, die in dem hier beschriebenen modularen Energiespeicher-Direktumrichtersystem 10 Anwendung finden können, wobei jedoch nur das in Fig. 20 gezeigte Modul eine Ausführungsform eines Moduls gemäß der beanspruchten Erfindung darstellt. Diese Module 14 fassen einige Beispiele zusammen, aber es versteht sich, dass auch andere Module 14 zum Einsatz kommen können, sofern sie den oben definierten Anforderungen des Systems 10 genügen.

In der folgenden Beschreibung wird unterschieden zwischen solchen Modulen, die zwei erste und zwei zweite Anschlüsse 16, 18 aufweisen und solchen, die jeweils drei erste und drei zweite Anschlüsse 16, 18 aufweisen.

Ferner wird in der folgenden Darstellung unterschieden zwischen Modulen, die in allen vier Quadranten der Strom-Spannungs-Ebene betrieben werden können (in der folgenden Beschreibung "Vier-Quadranten-Module") und solchen, die in lediglich zwei Quadranten der Strom-Spannungs-Ebene betrieben werden können ("Zwei-Quadranten-Module").

### Vier-Quadranten-Module mit zwei ersten und zwei zweiten Anschlüssen

Fig. 7 - 12 zeigen Beispiele für Vier-Quadranten-Module, die keine Ausführungsformen der beanspruchten Erfindung darstellen, mit jeweils zwei ersten und zwei zweiten Anschlüssen 16, 18. Konkret zeigt Fig. 7 ein Modul 14 mit einem Speicherelement 26 für elektrische Energie, bei dem es sich beispielsweise um eine aufladbare Batterie bzw. einen Akkumulator handeln kann. Es versteht sich, dass auch andere Speicherelemente möglich sind, beispielsweise ein Kondensator oder eine Reddox-Flow-Zelle. Ferner versteht sich, dass anstelle der Speicherelemente 26 auch Energieumwandlungselemente zum Einsatz kommen können, beispielsweise Solarzellen, Brennstoffzellen oder Thermoelemente, ohne dass dies bei der Beschreibung der konkreten Ausführungsformen der Module 14, die im Wesentlichen die unterschiedlichen Schalttopologien aufzeigen soll, darauf im Einzelnen hingewiesen wird.

Das Modul 14 von Fig. 7 umfasst neun Schalter 28, die in der gezeigten Ausführungsform durch einen MOSFET 30 und eine Freilaufdiode 32 gebildet werden. Es versteht sich jedoch, dass auch andere Schalter zur Anwendung kommen können, insbesondere IGBTs, IGCTs oder Thyristoren. In den nachstehenden Abbildungen werden daher die Schalter durch ein generisches Symbol repräsentiert, wobei sich versteht, dass alle diese Möglichkeiten zur Anwendung kommen können.

Das Modul 14 von Fig. 7 ist operativ mit einer Steuerungseinrichtung (in Fig. 7 nicht gezeigt), die der Steuerungseinrichtung 20 von Fig. 1 entspricht. Diese Steuerungseinrichtung empfängt Informationen bezüglich des aktuellen Ladezustandes des Speicherelementes 26 bzw. der aktuellen Leistung oder Spannung, falls anstelle des Speicherelements 26 ein Energieumwandlungselement vorhanden ist. Ferner ist diese Steuerung geeignet, die Schalter 28 des Moduls 14 anzusteuern und dadurch zu betätigen.

Das Modul 14 von Fig. 7 ist ein Vier-Quadranten-Modul, das in allen vier Quadranten der Strom-Spannungs-Ebene betrieben werden kann. Wenn zwei der in Fig. 7 gezeigten Module 14 hintereinandergeschaltet werden, so können die entsprechenden Speicherelemente 26 dieser benachbarten Module
- in Reihe mit gleicher Polarität,
- in Reihe mit entgegengesetzter Polarität,
- parallel mit gleicher Polarität, und
- parallel mit entgegengesetzter Polarität
geschaltet werden. Ferner kann das Speicherelement 26 deaktiviert werden, indem der Schalter 28, der an dem in der Darstellung von Fig. 7 oberen Pol des Speicherelementes 26 angrenzt, geöffnet wird.

Wenn eine Vielzahl von Modulen 14 gemäß Fig. 7 hintereinandergeschaltet ist, können die Speicherelemente 26 nicht nur benachbarter Module 14, sondern auch solcher Module 14, die durch ein oder mehrere deaktivierte Module 14 getrennt sind, wahlweise in Reihe und parallel geschaltet werden.

Fig. 8 zeigt die Hintereinanderschaltung einer Mehrzahl von Modulen 14 nach Fig. 7, bei denen die Kombination aus MOSFET 30 und Freilaufdiode 32 durch ein einfaches Schaltersymbol ersetzt wurde. Ferner wurde in der Hintereinanderschaltung ein einzelnes Modul 14 durch einen gestrichelten Kasten kenntlich gemacht.

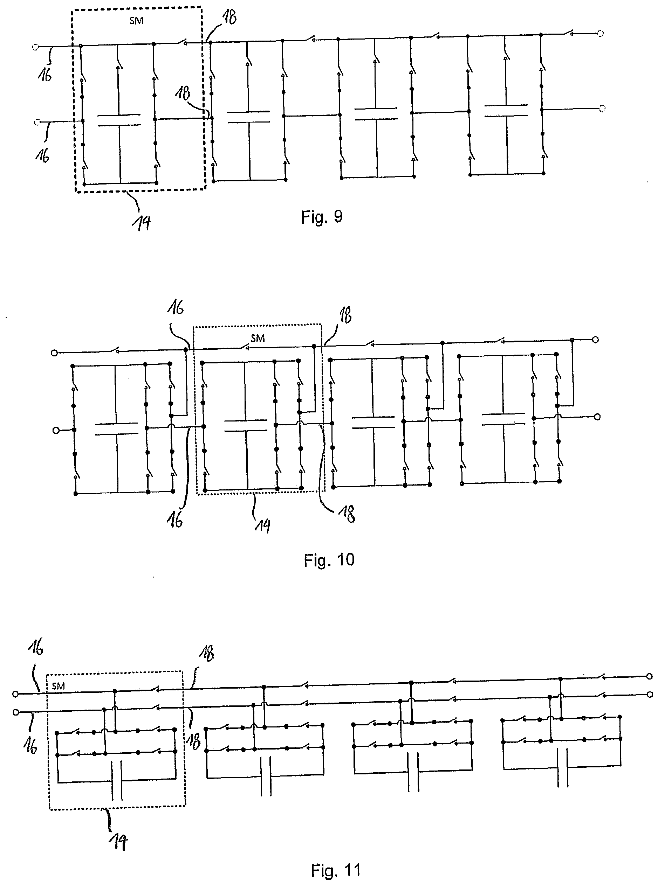

Fig. 9 zeigt eine Hintereinanderschaltung von Schaltmodulen 14 eines anderen Typs mit lediglich sechs Schaltern 28 pro Modul, wobei ein einzelnes Modul wiederum durch ein gestricheltes Kästchen gekennzeichnet ist. In dieser und den nachfolgenden Figuren werden die Bezugszeichen für die Schalter 28 und die Speicherelemente weggelassen, da sie für das Verständnis nicht benötigt werden.

Man beachte, dass der Begriff "Modul" 14 in der vorliegenden Offenbarung breit zu verstehen ist. In manchen Ausführungsformen werden die Module 14 zweckmäßigerweise separate Baugruppen sein, die miteinander kombiniert werden und einzeln ausgetauscht werden können. In anderen Ausführungsformen bestehen die Module jedoch lediglich aus Funktionseinheiten innerhalb einer Schaltung, ohne dass die Module baulich in irgendeiner Weise getrennt wären.

Das Modul 14 von Fig. 9 enthält ebenfalls einen Schalter, über den ein Pol des Speicherelements vom Rest des Moduls abgekoppelt werden kann, um damit das Speicherelement zu deaktivieren.

Fig. 10 und 11 zeigen zwei weitere Vier-Quadranten-Module 14 mit jeweils zwei ersten und zwei zweiten Anschlüssen 16, 18 mit sieben bzw. sechs Schaltern pro Modul 14. Bei den Modulen 14 von Fig. 10 und 11 lässt sich gleichfalls das Speicherelement deaktivieren, allerdings ist zu diesem Zweck kein Schalter vorgesehen, der unmittelbar an einen Pol des Speicherelements angrenzt.

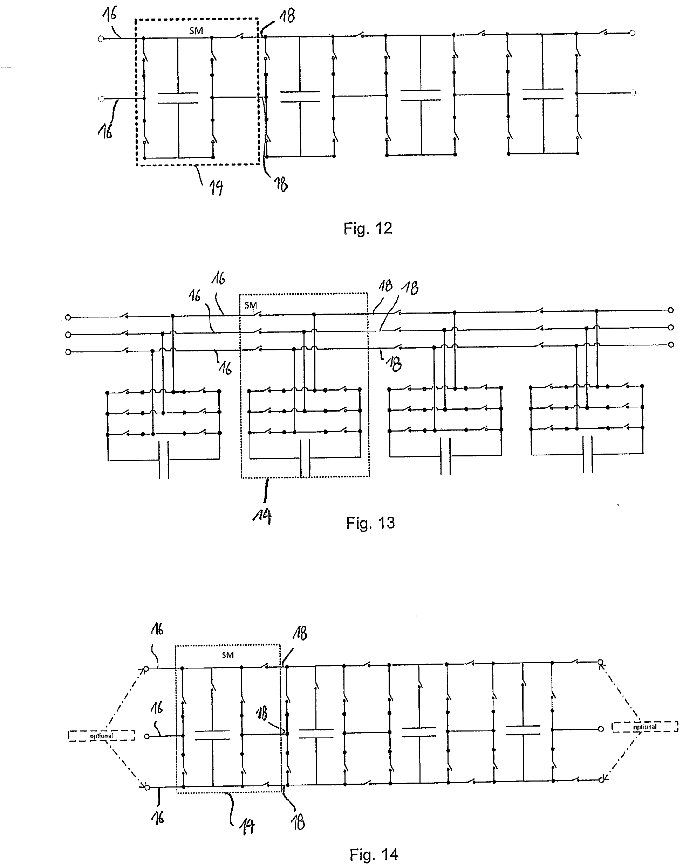

Schließlich zeigt. Fig. 12 ein Beispiel mit lediglich fünf Schaltern pro Modul 14. In dem in Fig. 12 gezeigten Beispiel gestatten die Module 14 jedoch nicht die Parallelschaltung von zwei Modulen 14, die durch ein oder mehrere deaktivierte Module 14 getrennt sind. Fig. 12 weist jedoch auf die Möglichkeit hin, die Speicherelemente gegebenenfalls auf andere Art zu deaktivieren. Wenn es sich beispielsweise bei dem Speicherelement um eine Redox-Flow-Zelle handelt, kann diese deaktiviert werden, indem die Pumpe abgestellt wird. Auf diese Weise könnte also das Speicherelement gleichfalls durch Ansteuerung durch die Steuerungseinheit (nicht gezeigt) deaktiviert werden, jedoch nicht durch Schalten eines der hier explizit dargestellten Schalter.

### Vier-Quadranten-Module mit drei ersten und drei zweiten Anschlüssen

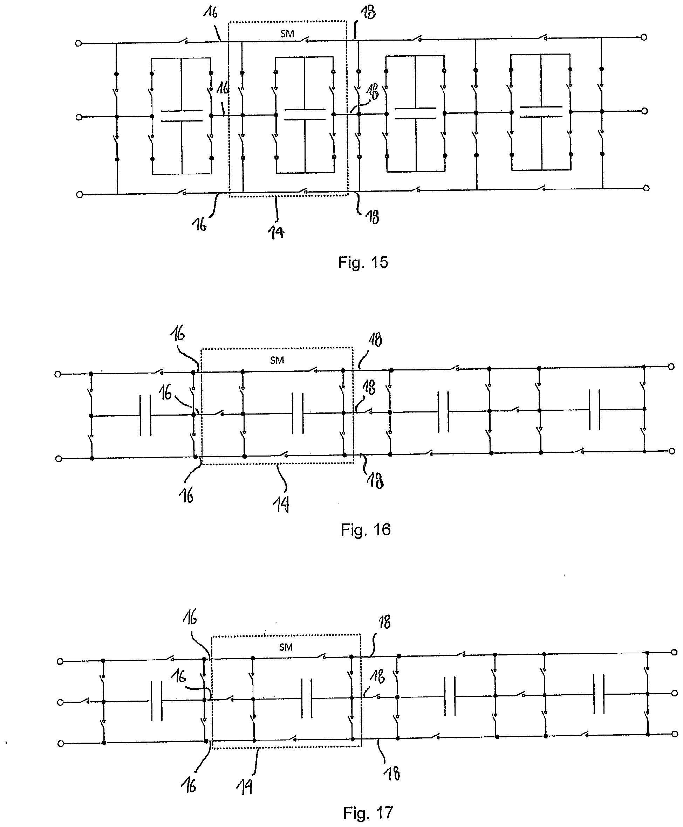

Fig. 13 - 18 zeigen Beispiele von Vier-Quadranten-Modulen, die nicht unter den Schutzumfang der Ansprüche fallen, die jeweils drei erste Anschlüsse 16 und drei zweite Anschlüsse 18 aufweisen. Eine Verallgemeinerung auf mehr als drei erste bzw. zweite Anschlüsse ist für den Fachmann in Anbetracht der hier vorgestellten Prinzipien möglich. Man beachte, dass das Modul 14 von Fig. 18, ähnlich wie dasjenige von Fig. 12 aufgrund der gezeigten Schalter 28 allein noch nicht in der Lage ist, Module 14, die durch ein oder mehrere deaktivierte Module 14 getrennt sind, parallel zu schalten. Die Module 14 von Fig. 16 und 17 sind an sich identisch, mit Ausnahme des ersten bzw. letzten Moduls der Kette.

### Zwei-Quadranten-Module

Fig. 19 und 20 zeigen Beispiele für Zwei-Quadranten-Module mit jeweils zwei ersten und zwei zweiten Anschlüssen 16, 18, wobei das Modul von Fig. 20 ein Modul darstellt, wie es in der beanspruchten Erfindung verwendet werden kann.

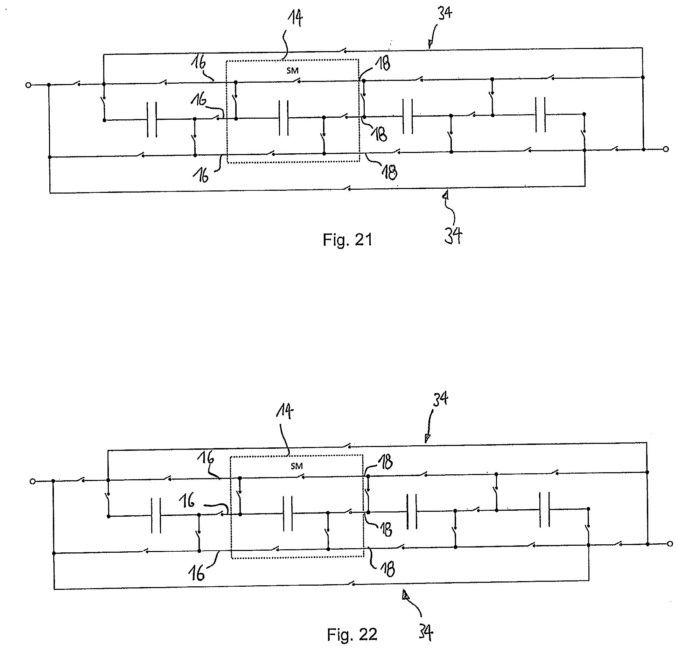

Fig. 21 und 22 zeigen Beispiele für Zwei-Quadranten-Module mit jeweils drei ersten und drei zweiten Anschlüssen 16, 18.

Um die volle Funktionalität des Energiespeicher-Direktumrichtersystems bereitzustellen kann eine Kette von Zwei-Quadranten-Modulen durch eine Zusatzschaltung 34, wie sie in Fig. 21 und 22 gezeigt ist, als Ganzes umgepolt werden.

### Betrieb des Energiespeicher-Direktumrichtersystems

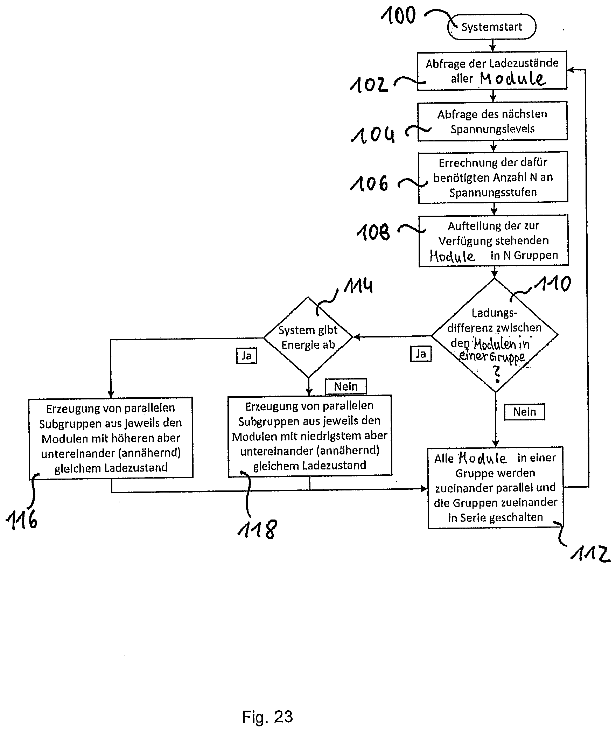

Fig. 23 zeigt ein Flussdiagramm, das den Betrieb des Systems nach einer Weiterbildung der Erfindung veranschaulicht.

Der Prozess beginnt mit dem Systemstart bei Schritt 100. Im nachfolgenden Schritt 102 fragt die Steuerungseinrichtung den Ladezustand aller Module 14 ab. Im nachfolgenden Schritt 104 wird der nächste benötigte Spannungslevel abgefragt. Im folgenden Schritt 106 berechnet die Steuereinrichtung 20 die zum Erreichen des Spannungslevels benötigte Anzahl N an Spannungsstufen. Wenn der Brückenzweig 12 beispielsweise aktuell eine Spannung von 23 V liefern soll und die Speicherelemente 26, z. B. Batteriezellen, eine Spannung von 5 V aufweisen, so würden zum Erreichen der Spannung N = 6 Spannungsstufen benötigt.

In Schritt 108 werden die zur Verfügung stehenden Module 14 in N Gruppen aufgeteilt.

Im Schritt 110 wird überprüft, ob zwischen den Speicherelementen 26 einer Gruppe eine Differenz bezüglich des Ladungszustandes vorliegt. Wenn dies nicht der Fall ist, schreitet der Prozess zum Schritt 112 voran, in dem alle Module 14 in einer Gruppe zueinander parallel und die Gruppen zueinander in Serie geschaltet werden. Der Prozess springt dann zurück zum Schritt 102 und der Prozess beginnt von neuem.

Falls in Schritt 110 festgestellt wird, dass die Speicherelemente 26 innerhalb einer Gruppe unterschiedliche Ladezustände aufweisen, wird im nachfolgenden Schritt 114 geprüft, ob das System Energie abgibt, sich also im Energieabgabemodus befindet. Falls dies der Fall ist, werden im nachfolgenden Schritt 116 innerhalb der Gruppe Subgruppen aus Modulen 14 gebildet, deren Speicherelemente 26 einen höheren, aber untereinander gleichen oder zumindest annähernd gleichen Ladezustand aufweisen. Im Extremfall kann diese Subgruppe auch aus einem einzigen Modul 14 gebildet werden. Dann schreitet der Prozess wiederum zum Schritt 112 voran, in dem die Module 14 zueinander parallel und die Gruppen zueinander in Serie geschaltet werden. Da sich das System hier im Energieabgabemodus befindet, werden die Speicherelemente 26 der parallel geschalteten Subgruppe entladen, während die Speicherelemente 26 der weiteren Module 14 der Gruppe deaktiviert sind und somit geschont werden, d.h. es findet eine Angleichung des Ladezustandes statt. Auf diese Weise führt der Prozess automatisch dazu, dass die Module 14 zu jedem Zeitpunkt ungefähr gleichmäßig geladen sind.

Falls in Schritt 114 festgestellt wird, dass das System keine Energie abgibt, sondern sich im Ladezustand befindet, werden in Schritt 118 Subgruppen aus solchen Modulen 14 gebildet, die den niedrigsten, aber untereinander zumindest annährend gleichen Ladezustand aufweisen, und diese werden dann in Schritt 112 parallel und mit den Modulen 14 der weiteren Gruppen in Reihe geschaltet. In diesem Fall werden also diejenigen Module 14, die den geringsten Ladezustand haben, beim Laden bevorzugt berücksichtigt, wodurch wiederum eine Angleichung des Ladezustandes erreicht wird.

Man erkennt, dass es für diesen Prozess wesentlich ist, dass einzelne Module 14 deaktiviert werden können, und dass Module 14, die durch ein oder mehrere deaktivierte Module 14 getrennt sind, wahlweise parallel (innerhalb einer Gruppe) und in Reihe (nämlich Module aus verschiedenen Gruppen) geschaltet werden können.

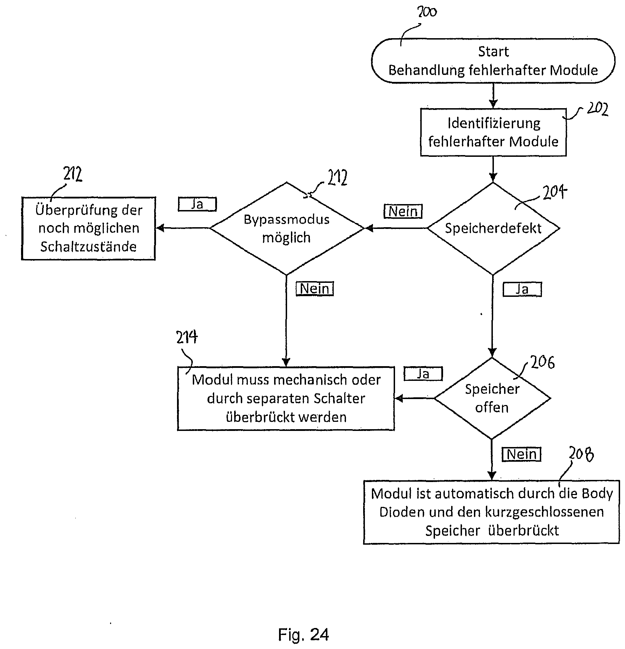

In Fig. 24 ist ein Flussdiagramm gezeigt, das die Behandlung fehlerhafter Module 14 illustriert. Der Prozess startet in Schritt 200. Im nachfolgenden Schritt 202 wird ein fehlerhaftes Modul 14 identifiziert. In Schritt 204 wird geprüft, ob der Fehler auf einem defekten Speicherelement 26 beruht. Falls dies der Fall ist, wird in Schritt 206 überprüft, ob das Speicherelement 26 "offen" ist, d.h. ob Strom durch das Speicherelement 26 fließen kann oder nicht. Falls das Speicherelement 26 nicht offen ist, bedeutet dies, dass das Modul 14 automatisch durch die Body-Dioden 32 und den kurzgeschlossenen Speicher 26 überbrückt ist (Schritt 208). Dies bedeutet, dass das Modul 14 zwar nicht mehr bei der Energieaufnahme oder Energieabgabe verwendet werden kann, dass es jedoch ebenso wenig den Betrieb der anderen Module 14 stört.

Falls in Schritt 204 festgestellt wird, dass der Fehler nicht in einem defekten Speicherelement 26 liegt, wird im Schritt 210 überprüft, ob ein Bypassmodus des Moduls 14 möglich ist. Falls dies der Fall ist, wird in Schritt 212 nur noch geprüft, welche Schaltzustände noch möglich sind. Falls ein Bypass jedoch nicht möglich ist, muss das Modul 14 entweder mechanisch oder durch einen separaten Schalter überbrückt werden (Schritt 214). Gleiches gilt, wenn in Schritt 206 festgestellt wird, dass der Fehler in der Tat auf einem defekten Speicherelement 26 beruht, das Speicherelement 26 jedoch "offen" ist.

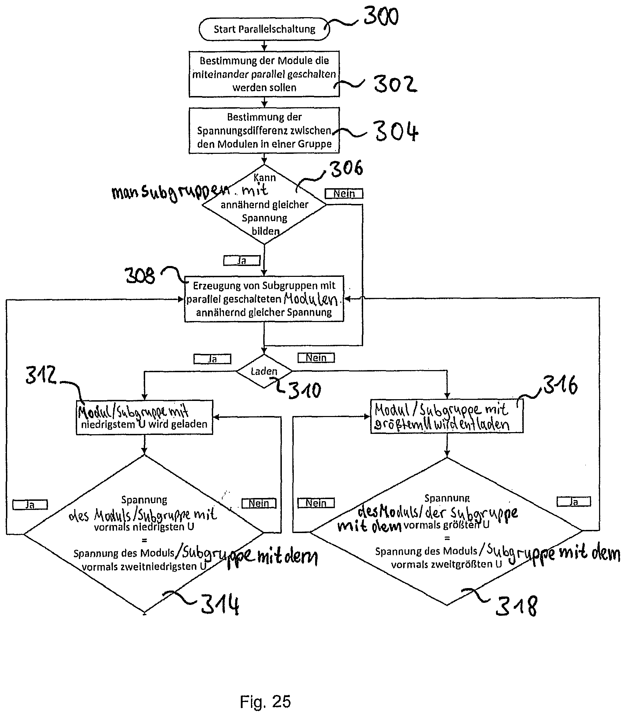

In Fig. 25 ist ein Flussdiagramm eines Prozesses veranschaulicht, der die Parallelschaltung von Modulen 14 steuert. Dieser Prozess ist dem Prozess von Fig. 23 konzeptionell ähnlich.

Der Prozess beginnt in Schritt 300. Im nachfolgenden Schritt 302 werden diejenigen Module 14 bestimmt, die miteinander parallel geschaltet werden sollen. Ähnlich wie in dem Prozess von Fig. 23 bilden solche Module 14, die parallel geschaltet werden sollen, eine Gruppe.

Im nachfolgenden Schritt 304 wird eine Spannungsdifferenz zwischen den Modulen 14 innerhalb der Gruppe bestimmt, und im nachfolgenden Schritt 306 wird bestimmt, ob man Gruppen mit annähernd gleicher Spannung bilden kann. Falls dies der Fall ist, werden in Schritt 308 Subgruppen mit parallel geschalteten Modulen 14 annähernd gleicher Spannung gebildet.

Nachfolgend schreitet der Prozess zum Schritt 310 voran, in dem geprüft wird, ob sich das System in einem Lademodus befindet oder nicht. Falls im Schritt 306 festgestellt wurde, dass man keine Subgruppen mit annähernd gleicher Spannung bilden kann, fährt der Prozess ebenfalls mit dem Schritt 310 fort.

Wenn in Schritt 310 festgestellt wird, dass sich das System in einem Ladezustand befindet, wird in Schritt 312 das Modul 14 bzw. die Subgruppe mit der niedrigsten Spannung U oder mit dem niedrigsten Ladezustand geladen. Im nachfolgenden Schritt 314 wird geprüft, ob die Spannung des Moduls/der Subgruppe mit dem vormals niedrigsten U gleich der Spannung des Moduls bzw. der Subgruppe mit dem vormals zweitniedrigsten U ist. Falls dies nicht der Fall ist, kehrt der Prozess zum Schritt 312 zurück und das Modul 14 bzw. die Subgruppe mit der niedrigsten Spannung U wird weitergeladen. Auf diese Weise werden die Spannungen des Moduls 14/der Subgruppe mit der niedrigsten Spannung sukzessive auf das Niveau des Moduls 14/der Subgruppe mit der zweitniedrigsten Spannung angehoben, bis diese übereinstimmen. In diesem Fall kehrt der Prozess zum Schritt 308 zurück.

Falls im Schritt 310 festgestellt wird, dass sich das System nicht in einem Ladezustand, sondern im Energieabgabemodus befindet, werden die Schritte 316 und 318 durchlaufen, die spiegelbildlich zu den Schritten 312 und 314 sind und keiner weiteren Erläuterung bedürfen.

Man erkennt also, dass die Parallelschaltung so durchgeführt wird, dass im Ladezustand sukzessive Module 14 und Gruppen geringerer Spannung geladen werden, um die Spannungen anzugleichen. Sobald die Spannungen angeglichen sind, werden Module 14 oder Subgruppen parallel geschaltet. Auf diese Weise fließt beim Parallelschalten kein Strom zwischen den Modulen 14, wodurch Verluste gering gehalten werden. Man beachte, dass es sich bei dem beschriebenen Prozess um einen "Angleichprozess", keinen "Ausgleichprozess" zwischen Speicherelementen 26 handelt, der mit Verlusten behaftet wäre.

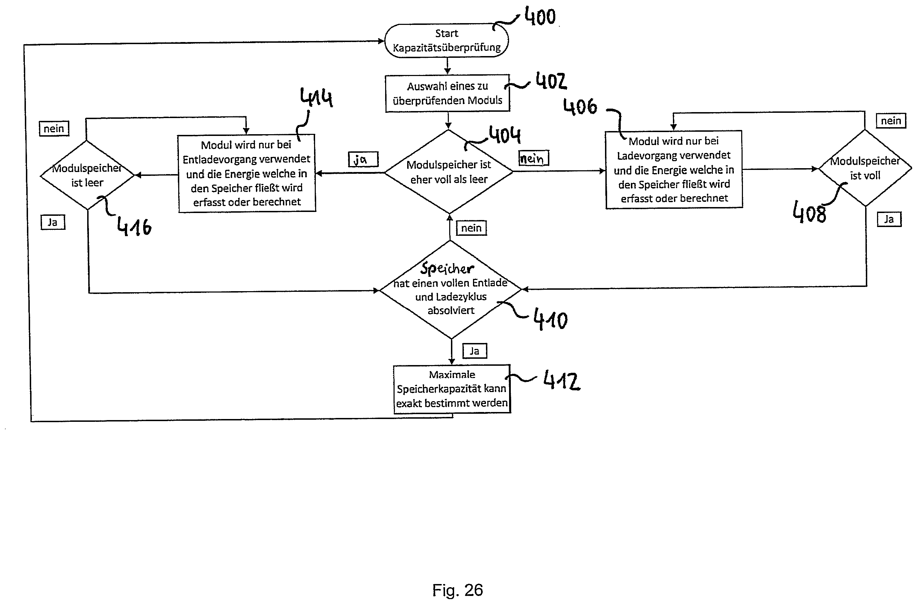

Schließlich zeigt Fig. 26 einen Prozess, in dem die Steuerungseinrichtung 20 die Kapazität eines Speicherelements 26 überprüft. Der Prozess beginnt bei Schritt 400. Im nachfolgenden Schritt 402 wird ein zu überprüfendes Modul 14 ausgewählt. Im Schritt 404 wird überprüft, ob das Speicherelement 26 des Moduls 14 eher voll als leer ist. Falls dies nicht der Fall ist, wird im folgenden Schritt 406 festgelegt, dass das betreffende Modul 14 nur noch bei Ladevorgängen, nicht aber bei Entladevorgängen verwendet wird und die Energie, welche in das Speicherelement 26 fließt, wird erfasst oder berechnet.

Nach jedem Ladevorgang wird in Schritt 408 geprüft, ob das Speicherelement 26 voll ist. Falls dies nicht der Fall ist, kehrt der Prozess zum Schritt 406 zurück, und das Speicherelement 26 des Moduls 14 wird weiter geladen. Sobald in Schritt 408 festgestellt wird, dass das Speicherelement 26 des betreffenden Moduls 14 voll ist, schreitet der Prozess zum Schritt 410 voran, in dem überprüft wird, ob das Speicherelement 26 einen vollen Entlade- und Ladezyklus absolviert hat. Wenn dies der Fall ist, schreitet der Prozess zum Schritt 412 voran, und die maximale Kapazität des Energiespeichers kann exakt bestimmt werden. Falls dies nicht der Fall ist, muss das Modul erst noch einen komplementären Entladevorgang durchlaufen, der durch die Schritte 414 und 416 erfolgt.

Die Schritte 414 und 416 sind das Gegenstück zu den Schritten 406 und 408 und benötigen keine weitere Erläuterung. Auf diese Weise ist es mit dem erfindungsgemäßen System 10 entweder nach den in Fig. 26 beschriebenen oder hierzu leicht abweichenden Schritten möglich, im laufenden Betrieb einzelne Energiespeicherelemente 26 vollständig zu laden oder zu entladen um deren Kapazität zu bestimmen. Insbesondere kann dabei sogar während eines Ladevorgangs des Energiespeicher-Direktumrichtersystems 10 ein einzelnes Speicherelement 26 entladen werden, in dem seine Ladung auf andere Speicherelemente übertragen wird. Umgekehrt kann auch während eines Entladevorgangs des Energiespeicher-Direktumrichtersystems 10 ein einzelnes Speicherelement 26 geladen werden, indem Ladung von anderen Speicherelementen 26 auf das einzelne Speicherelement 26 übertragen wird.

Wie aus der vorstehenden Beschreibung ersichtlich wird, stellt das Energiespeicher-Direktumrichtersystem der Erfindung ein System bereit, welche hocheffizient arbeitet, ein separates Ladungsmanagementsystem überflüssig macht und insbesondere bei Verwendung von chemischen Energiespeichern deren verwendbare Kapazität und Lebensdauer erhöht. Das System gestattet es, in einem Energieabgabemodus beliebige Spannungskurven zu erzeugen, sowohl netzsynchron als auch im Inselbetrieb. Umgekehrt kann elektrische Energie mit beliebiger Spannungskurve durch das System aufgenommen und in den genannten Speicherelementen gespeichert werden.

Dadurch, dass bei dem System der Erfindung die Funktionen eines Verbraucherumrichters, eines Ladeumrichters und eines üblichen Batteriemanagementsystems integral durch die schaltbaren Module und die zugehörige Steuerungseinrichtung bereitgestellt werden, kann der Wirkungsgrad des Systems gegenüber herkömmlichen Systemen erhöht werden.

Ein Ausbalancieren des Ladezustandes erfolgt vorzugsweise dadurch, dass Zellen mit höherem Ladezustand bevorzugt im Energieabgabemodus und Zellen mit geringem Ladezustand vorzugsweise im Ladeprozess eingebunden werden, ohne dass eine "Umladung" zwischen Speicherelementen nötig wäre.

Das System ermöglicht den Einsatz verschiedener Technologien in einem System, insbesondere die Kombination von unterschiedlichen Arten von Speicherelementen mit unterschiedlichen Arten von Energieumwandlungselementen.

Ferner gestattet das System den sogenannten "Second-Use" von ausgesonderten Zellen anderer Batteriesysteme, unabhängig von deren physikalischen oder elektrischen Eigenschaften und ohne zusätzliche elektrische Komponenten, wie DC/DC-Konverter und DC/DC-Zwischenkreis. Auch gestattet das System die einfache Kombination unterschiedlicher Batterietechnologien und die damit verbundene Summierung der individuellen Vorteile, z. B. schnell ladefähige Zellen mit geringer Kapazität kombiniert mit Zellen mit hoher Kapazität aber langer Ladezeit. Die Energiespeicher- oder Energiewandlerelemente können durch den modularen Aufbau einfach ausgetauscht werden, auch im laufenden Betrieb. Ebenso ist es möglich, ohne große Einschränkung der Funktionalität des Gesamtsystems einzelne Speicherelemente bzw. Energieumwandlungselemente durch die genannte Deaktivierung außer Betrieb zu nehmen.

Ferner ist das System durch seinen Aufbau außerordentlich redundant und ausfallssicher, und es kann aufgrund seines modularen Aufbaus im Grunde beliebig skaliert werden, sowohl hinsichtlich seiner Leistung als auch seiner Gesamtkapazität.

Ein weiterer Vorteil besteht darin, dass die Ströme und Spannungen der einzelnen Module 14 gering gehalten werden können, sodass nur Spannungen unterhalb der Schutzkleinspannung auftreten und damit die Bedingungen der Schutzklasse III erfüllt werden können.. Dadurch wird die Gefahr eines Stromunfalls vermieden, wodurch die Sicherheit des Anwenders und des Wartungspersonals entscheidend verbessert wird.

Bei Anwendungen in der Elektromobilität vereinigt das System die Funktionalität einer herkömmlichen Batterie, eines Umrichters für den Motor und eines Ladeumrichters. Zudem ist das System ohne Mehraufwand durch seine freie Konfigurierbarkeit und hohe Anzahl an Freiheitsgraden zu allen Ladestromquellen kompatibel. Selbst ein DC-Schnellladevorgang schadet der Lebensdauer der Batterie bzw. Akkumulatoren - im Gegensatz zu aktuellen Systemen - nicht oder nur minimal.

Schließlich kann das System direkt Wechselspannung oder Drehstrom aufnehmen bzw. abgeben und so direkt mit einer elektrischen Maschine oder einem Wechselstromübertragungs- oder Hausnetz verbunden werden.

### BEZUGSZEICHENLISTE

- 10: Energiewandler-Direktumrichtersystem
- 12: Brückenzweig
- 14: Modul
- 16: erster Eingang
- 18: zweiter Eingang
- 20: Steuereinrichtung
- 22: äußerer Anschluss
- 24: Induktivität
- 26: Speicherelement
- 28: Schalter
- 30: MOSFET
- 32: Freilaufdiode
- 34: Umpolungsschaltung

## Patentansprüche

1. Modulares Energiespeicher-Direktumrichtersystem (10), das Folgendes umfasst:
mindestens einen Brückenzweig (12), der eine Mehrzahl von hintereinander geschalteten Modulen (14) umfasst,
wobei jedes der genannten Module (14)
- zwei erste Anschlüsse (16) und zwei zweite Anschlüsse (18),
- ein Speicherelement (26) für elektrische Energie, insbesondere eine Batterie, oder ein Energieumwandlungselement, und
- genau vier Schalter (28) umfasst,
wobei bei jeweils zwei benachbarten Modulen (14) aus den genannten Modulen (14) die ersten Anschlüsse (16) des einen Moduls direkt oder über eine dazwischen geschaltete Komponente mit den zweiten Anschlüssen (18) des anderen Moduls (14) verbunden sind, und
eine Steuereinrichtung (20), die
- dazu eingerichtet ist, Informationen bezüglich des aktuellen Ladezustandes der Speicherelemente (26) bzw. Spannung oder Leistung der Energieumwandlungselemente zu erhalten, und
- die geeignet ist, zumindest einen Teil der genannten Mehrzahl von Schaltern (28) in Abhängigkeit von dem aktuellen Ladezustand der Speicherelemente (26) bzw. der aktuellen Leistung oder Spannung der Energieumwandlungselemente in einem Energieabgabemodus derart anzusteuern, dass der Brückenzweig (12) als Ganzes eine gewünschte Spannung oder eine Phase einer gewünschten Spannung liefert,
wobei die genannten Module (14) so ausgelegt und ansteuerbar sind, dass
- das Speicherelement (26) bzw. Energieumwandlungselement eines Moduls (14) wahlweise deaktiviert werden kann, und
- dass die Speicherelemente (26) bzw. Energieumwandlungselemente von zwei Modulen (14), die durch mindestens ein dazwischenliegendes Modul (14) mit deaktiviertem Speicherelement (26)/Energieumwandlungselement getrennt sind, wahlweise parallel und in Reihe schaltbar sind,
wobei das Speicherelement (26)/Energieumwandlungselement eines Moduls (14) zwei Pole (26a, 26b) hat und in Reihe mit einem ersten Schalter (S1) zwischen die beiden ersten Anschlüsse (16) des Moduls (14) geschaltet ist, sodass einer der Pole (26a, 26b) des Speicherelements (26)/Energieumwandlungselements durch den ersten Schalter (S1) vom Rest des Moduls (14) abkoppelbar ist,
wobei die genau vier Schalter (28) ferner folgendes umfassen:
- einen zweiten Schalter (S2) mit einem ersten Ende (S2a), welches mit einem der zweiten Anschlüsse (18) des Moduls (14) verbunden ist, und einem zweiten Ende (S2b), welches mit einem der ersten Anschlüsse (16) des Moduls verbunden ist,
- einen dritten Schalter (S3) mit einem ersten Ende (S3a), welches mit dem anderen der zweiten Anschlüsse (18) des Moduls (14) verbunden ist, und einem zweiten Ende (S3b), welches mit dem anderen der ersten Anschlüsse (16) des Moduls verbunden ist, und
- einen vierten Schalter (S4), der in einer Verbindungsleitung (36) vorgesehen ist, die das erste Ende (S2a) des zweiten Schalters (S2) mit dem zweiten Ende (S3b) des dritten Schalters (S3) verbindet, wobei das Speicherelement (26)/Energieumwandlungselement und der erste Schalter (S1) zwischen das zweite Ende (S2b) des zweiten Schalters (S2) und das zweite Ende (S3b) des dritten Schalters (S3) geschaltet sind.

2. Energiespeicher-Direktumrichtersystem (10) nach Anspruch 1, bei dem die Steuereinrichtung (20) geeignet ist, zumindest einen Teil der genannten Mehrzahl von Schaltern (28) in Abhängigkeit von dem aktuellen Ladezustand der Speicherelemente (26) bzw. der aktuellen Leistung oder Spannung der Energieumwandlungselemente in einem Lademodus anzusteuern, um zumindest einen Teil der Speicherelemente (26) durch eine externe am Brückenzweig (12) anliegende AC- oder DC-Spannung aufzuladen.

3. Energiespeicher-Direktumrichtersystem (10) nach Anspruch 1, bei dem das Speicherelement/Energieumwandlungselement (26) durch eine Stellung der Schalter (28) des betreffenden Moduls (26), in der mindestens einer der Pole des Speicherelements (26)/Energieumwandlungselements mit keinem der ersten und zweiten Anschlüsse (16, 18) verbunden ist, deaktivierbar ist.

4. Energiespeicher-Direktumrichtersystem (10) nach einem der vorhergehenden Ansprüche, bei dem die Module (14) nur in zwei Quadranten der Strom-Spannungsebene betrieben werden können, und bei dem eine Zusatzschaltung (34) vorgesehen ist, durch die eine Kette von hintereinander geschalteten Zwei-Quadrantenmodulen (14) als Ganzes umgepolt werden kann.

5. Energiespeicher-Direktumrichtersystem (10) nach einem der vorhergehenden Ansprüche, bei dem die zwei äußeren Anschlüsse (16, 18) in dem ersten und/oder letzten Modul des Brückenzweiges miteinander verbunden sind.

6. Energiespeicher-Direktumrichtersystem (10) nach einem der vorhergehenden Ansprüche, welches zwei, drei, vier, fünf oder mehr Brückenzweige (12) enthält, und/oder bei dem die zwei äußeren Anschlüsse (16, 18) im ersten und/oder letzten Modul (14) eines Brückenzweiges (12) separat mit zwei äußeren Anschlüssen (16, 18) eines Moduls (14) eines angrenzenden Brückenzweiges (12) verbunden sind, wobei
die genannten zwei, drei, vier, fünf oder mehr Brückenzweige (12) vorzugsweise in einer Sterntopologie oder in einer Ringtopologie miteinander verschaltet sind, und/oder
wobei die zwei, drei, vier, fünf oder mehr Brückenzweige (12) vorzugsweise derart in einer Ringtopologie verschaltet sind, dass die mindestens zwei äußeren Anschlüsse (16, 18) eines jeden Brückenzweiges (12) separat mit den mindestens zwei äußeren Anschlüssen (16, 18) des angrenzenden Brückenzweiges (12) verbunden sind,
und bei dem die Steuereinrichtung (20) dazu eingerichtet ist, zumindest einen Teil der genannten Mehrzahl von Schaltern (28) so anzusteuern, dass mindestens zwei voneinander unabhängige Ringströme durch den Ring aus Brückenzweigen (12) fließen können.

7. Energiespeicher-Direktumrichtersystem (10) nach einem der vorhergehenden Ansprüche, bei dem innerhalb des mindestens einen Brückenzweiges (12), insbesondere innerhalb eines Moduls oder zwischen benachbarten Modulen, Induktivitäten (24) vorgesehen sind, und/oder
bei dem die Schalter (28) zumindest überwiegend durch MOS-FETs (30), IGBTs, IGCTs oder Thyristoren gebildet sind, und/oder
bei dem die Speicherelemente (26) durch eines oder mehrere der folgenden Elemente gebildet sind:
- einen Kondensator,
- eine Batteriezelle, insbesondere eine Second-Use-Zelle,
- eine Redox-Flowzelle, und/oder
bei dem die Energiewandlungselemente durch Solarzellen, Brennstoffzellen oder Thermoelemente gebildet sind, und/oder
bei dem zumindest ein Teil der genannten Module (14) ein Speicherelement (26) und zumindest ein Teil der Module (14) ein Energiewandlungselement umfasst.

8. Energiespeicher-Direktumrichtersystem (10) nach einem der vorhergehenden Ansprüche, bei dem ein Teil der Module (14) Speicherelemente (26) eines ersten Typs und ein anderer Teil der Module (14) Speicherelemente (26) eines zweiten Typs umfasst, der von dem ersten Typ verschieden ist, wobei sich der erste Typ und der zweite Typ, insbesondere in einem oder mehreren der folgenden Merkmale unterscheiden:
- Ladezeit,
- Innenwiderstand,
- Kapazität, und/oder
bei dem zumindest ein Teil der Module sowohl ein Speicherelement als auch ein Energieumwandlungselement enthält.

9. Energiespeicher-Direktumrichtersystem (10) nach einem der vorhergehenden Ansprüche, wobei die Steuereinrichtung (20) geeignet ist, Gruppen von Modulen (14) zu bestimmen, deren Speicherelemente (26) parallel zu schalten sind,
wobei die Steuereinrichtung dazu eingerichtet ist, zumindest einen Teil der genannten Mehrzahl von Schaltern (28) in Abhängigkeit von dem aktuellen Ladezustand der Speicherelemente (26) derart anzusteuern, dass vor dem Parallelschalten der Module (14) der Gruppe die Spannungen oder Ladezustände der Module angeglichen werden, indem
- während eines Ladevorgangs Module (14), oder Moduluntergruppen, die eine geringere Spannung bzw. einen geringeren Ladezustand aufweisen, bevorzugt geladen werden, und/oder
- während eines Energieabgabemodus Module (14) oder Moduluntergruppen, die eine hohe Spannung bzw. einen hohen Ladezustand aufweisen, bevorzugt entladen werden, und/oder
bei dem die Steuerschaltung (20) dazu eingerichtet ist, die Kapazität des Speicherelements (26) eines Moduls (14) zu bestimmen, indem das Speicherelement (26) im laufenden Betrieb des Systems vollständig geladen und vollständig entladen wird und die Energie, welche in bzw. aus dem Speicherelement (26) fließt, erfasst wird, und/oder bei dem die Steuereinrichtung (20) geeignet ist, fehlerhafte Module durch Überprüfung zu identifizieren, wobei die Überprüfung eines oder mehrere der folgenden Kriterien beinhaltet:
- Ist das Speicherelement defekt?
- Ist das Speicherelement kurzgeschlossen oder offen?
- Ist ein Bypassmodus möglich?
- Welche Schaltzustände sind noch möglich?, und/oder
bei dem die Steuereinrichtung (20) dazu eingerichtet ist, zumindest einen Teil der Schalter (28) derart anzusteuern, dass das System eine Netzspannung, insbesondere ein drei-phasige Netzspannung von 1000 V oder weniger, vorzugsweise von ungefähr 400 V ausgibt.

10. Elektrischer Antrieb für ein Fahrzeug, umfassend ein modulares Energiespeicher-Direktumrichtersystem (10) nach einem der vorhergehenden Ansprüche.

11. Verfahren zum Herstellen eines modularen Energiespeicher-Direktumrichtersystems (10), insbesondere eines Energiespeicher-Direktumrichtersystems (10) nach einem der Ansprüche 1 - 10, das folgendes umfasst:
Bereitstellen mindestens eines Brückenzweiges (12), der eine Mehrzahl von hintereinandergeschalteten Modulen (14) umfasst, wobei jedes der genannten Module (14)
- zwei erste Anschlüsse (16) und zwei zweite Anschlüsse (18),
- ein Speicherelement (26) für elektrische Energie, insbesondere eine Batterie, oder ein Energieumwandlungselement, und
- genau vier Schalter (28) umfasst,
wobei bei jeweils zwei benachbarten Modulen (14) aus den genannten Modulen (14) die ersten Anschlüsse (16) des einen Moduls direkt oder über eine dazwischen geschaltete Komponente mit den zweiten Anschlüssen (18) des anderen Moduls (14) verbunden sind,
Bereitstellen einer Steuereinrichtung (20), die
- dazu eingerichtet ist, Informationen bezüglich des aktuellen Ladezustandes der Speicherelemente (26) bzw. Spannung oder Leistung der Energieumwandlungselemente zu erhalten, und
- die geeignet ist, zumindest einen Teil der genannten Mehrzahl von Schaltern (28) in Abhängigkeit von dem aktuellen Ladezustand der Speicherelemente (26) bzw. der aktuellen Leistung oder Spannung der Energieumwandlungselemente in einem Energieabgabemodus derart anzusteuern, dass der Brückenzweig (12) als Ganzes eine gewünschte Spannung oder eine Phase einer gewünschten Spannung liefert,
wobei die genannten Module (14) so ausgelegt und ansteuerbar sind, dass
- das Speicherelement (26) bzw. Energieumwandlungselement eines Moduls (14) wahlweise deaktiviert werden kann, und
- dass die Speicherelemente (26) bzw. Energieumwandlungselemente von zwei Modulen (14), die durch mindestens ein dazwischenliegendes Modul (14) mit deaktiviertem Speicherelement (26)/Energieumwandlungselement getrennt sind, wahlweise parallel und in Reihe schaltbar sind, wobei das Speicherelement (26)/Energieumwandlungselement eines Moduls (14) zwei Pole (26a, 26b) hat und in Reihe mit einem ersten Schalter (S1) zwischen die beiden ersten Anschlüsse (16) des Moduls (14) geschaltet ist, sodass einer der Pole (26a, 26b) des Speicherelements (26)/Energieumwandlungselements durch den ersten Schalter (S1) vom Rest des Moduls (14) abkoppelbar ist, wobei die genau vier Schalter (28) ferner folgendes umfassen:
- einen zweiten Schalter (S2) mit einem ersten Ende (S2a), welches mit einem der zweiten Anschlüsse (18) des Moduls (14) verbunden ist, und einem zweiten Ende (S2b), welches mit einem der ersten Anschlüsse (16) des Moduls verbunden ist,
- einen dritten Schalter (S3) mit einem ersten Ende (S3a), welches mit dem anderen der zweiten Anschlüsse (18) des Moduls (14) verbunden ist, und einem zweiten Ende (S3b), welches mit dem anderen der ersten Anschlüsse (16) des Moduls verbunden ist, und
- einen vierten Schalter (S4), der in einer Verbindungsleitung (36) vorgesehen ist, die das erste Ende (S2a) des zweiten Schalters (S2) mit dem zweiten Ende (S3b) des dritten Schalters (S3) verbindet, wobei das Speicherelement (26)/Energieumwandlungselement und der erste Schalter (S1) zwischen das zweite Ende (S2b) des zweiten Schalters (S2) und das zweite Ende (S3b) des dritten Schalters (S3) geschaltet sind.

12. Verfahren nach Anspruch 11, bei dem für die Speicherelemente (26) Second-Use-Batteriezellen verwendet werden.

13. Verfahren zum Bereitstellen einer gewünschten Spannung oder einer Phase einer gewünschten Spannung, das Folgendes umfasst:
Empfangen von Informationen bezüglich des aktuellen Ladezustandes von Speicherelementen (26) bzw. der Spannung oder Leistung von Energieumwandlungselementen, die in einer Mehrzahl von hintereinander geschalteten Modulen (14) enthalten sind, wobei jedes der genannten Module (14)
- zwei erste Anschlüsse (16) und zwei zweite Anschlüsse (18),
- ein Speicherelement (26) für elektrische Energie, insbesondere eine Batterie, oder ein Energieumwandlungselement, und
- genau vier Schalter (28) umfasst,
wobei bei jeweils zwei benachbarten Modulen (14) aus den genannten Modulen die ersten Anschlüsse (16) des einen Moduls (14) direkt oder über eine dazwischen geschaltete Komponente mit den zweiten Anschlüssen (18) des anderen Moduls (14) verbunden sind,
Ansteuern zumindest eines Teils der genannten Mehrzahl von Schaltern (28) in Abhängigkeit von dem aktuellen Ladezustand der Speicherelemente (26), bzw. der aktuellen Leistung der Spannung der Energieumwandlungselemente derart, dass ein Brückenzweig (12), der eine Mehrzahl von derartigen hintereinandergeschalteten Modulen (14) umfasst, als Ganzes eine gewünschte Spannung oder eine Phase einer gewünschten Spannung liefert,
wobei mindestens ein Speicherelement (26) bzw. Energieumwandlungselement eines Moduls deaktiviert wird, und
die Speicherelemente (26) bzw. Energieumwandlungselemente von zwei Modulen (14), die durch mindestens ein dazwischenliegendes Modul (14) mit deaktiviertem Speicherelement/Energieumwandlungselement getrennt sind, parallel oder in Reihe geschaltet werden,
wobei das Speicherelement (26)/Energieumwandlungselement eines Moduls (14) zwei Pole (26a, 26b) hat und in Reihe mit einem ersten Schalter (S1) zwischen die beiden ersten Anschlüsse (16) des Moduls (14) geschaltet ist, sodass einer der Pole (26a, 26b) des Speicherelements (26)/Energieumwandlungselements durch den ersten Schalter (S1) vom Rest des Moduls (14) abkoppelbar ist,
wobei die genau vier Schalter (28) ferner Folgendes umfassen:
- einen zweiten Schalter (S2) mit einem ersten Ende (S2a), welches mit einem der zweiten Anschlüsse (18) des Moduls (14) verbunden ist, und einem zweiten Ende (S2b), welches mit einem der ersten Anschlüsse (16) des Moduls verbunden ist,
- einen dritten Schalter (S3) mit einem ersten Ende (S3a), welches mit dem anderen der zweiten Anschlüsse (18) des Moduls (14) verbunden ist, und einem zweiten Ende (S3b), welches mit dem anderen der ersten Anschlüsse (16) des Moduls verbunden ist, und
- einen vierten Schalter (S4), der in einer Verbindungsleitung (36) vorgesehen ist, die das erste Ende (S2a) des zweiten Schalters (S2) mit dem zweiten Ende (S3b) des dritten Schalters (S3) verbindet, wobei das Speicherelement (26)/Energieumwandlungselement und der erste Schalter (S1) zwischen das zweite Ende (S2b) des zweiten Schalters (S2) und das zweite Ende (S3b) des dritten Schalters (S3) geschaltet sind.

14. Verfahren nach Anspruch 13, welches zum Betrieb eines modularen Energiespeicher-Direktumrichtersystems (10) nach einem der Ansprüche 1 bis 9 ausgeführt wird, und/oder
mit den folgenden Schritten:
Bestimmen von Gruppen von Modulen (14), deren Speicherelemente (26) parallel zu schalten sind, und
Angleichen der Spannungen oder Ladezustände der Module innerhalb der Gruppe, vor dem Parallelschalten der Module (14) der Gruppe, indem
- während eines Ladevorgangs Module (14) oder Moduluntergruppen, die eine geringere Spannung bzw. einen geringeren Ladezustand aufweisen, bevorzugt geladen werden, und/oder
- während eines Energieabgabemodus Module (14) oder Moduluntergruppen, die eine hohe Spannung bzw. einen hohen Ladezustand aufweisen, bevorzugt entladen werden.

15. Verfahren nach einem der Ansprüche 13 oder 14, bei dem ferner die Kapazität des Speicherelements (26) eines Moduls (14) bestimmt wird, indem das Speicherelement (26) im laufenden Betrieb des Systems (10) vollständig geladen und vollständig entladen wird und die Energie, welche in oder aus dem Speicherelement (26) fließt, erfasst wird, und/oder
bei dem fehlerhafte Module (14) identifiziert werden, indem eines oder mehrere der folgenden Kriterien überprüft werden:
- Ist das Speicherelement defekt?
- Ist das Speicherelement kurzgeschlossen oder offen?
- Ist ein Bypassmodus möglich?
- Welche Schaltzustände sind noch möglich?

## Claims

1. A modular energy storage direct converter system (10) comprising:
at least one bridge branch (12) comprising a plurality of modules (14) connected in series,
wherein each of said modules (14) comprises
- two first terminals (16) and two second terminals (18),
- a storage element (26) for electrical energy, in particular a battery, or an energy conversion element, and
- exactly four switches (28),
wherein, in each two adjacent modules (14) out of said modules (14), the first terminals (16) of one module are connected to the second terminals (18) of the other module (14) directly or via a component connected in between, and
a control device (20) which
- is configured to obtain information relating to the current state of charge of the storage elements (26) or voltage or power of the energy conversion elements, and
- which is suitable for actuating at least some of said plurality of switches (28) depending on the current state of charge of the storage elements (26) or the current power or voltage of the energy conversion elements in an energy output mode in such a way that the bridge branch (12) as a whole supplies a desired voltage or a phase of a desired voltage,
wherein said modules (14) are designed and can be actuated in such a way that
- the storage element (26) or energy conversion element of a module (14) can be selectively deactivated, and
- the storage elements (26) or energy conversion elements of two modules (14), which are separated by at least one intermediate module (14) with a deactivated storage element (26)/energy conversion element, can be selectively connected in parallel and in series,
wherein the storage element (26)/energy conversion element of a module (14) has two poles (26a, 26b) and is connected in series with a first switch (S1) between the two first terminals (16) of the module (14), so that one of the poles (26a, 26b) of the storage element (26)/energy conversion element can be decoupled from the rest of the module (14) by the first switch (S1),
wherein the exactly four switches (28) further comprise:
- a second switch (S2) with a first end (S2a), which is connected to one of the second terminals (18) of the module (14), and a second end (S2b), which is connected to one of the first terminals (16) of the module,
- a third switch (S3) with a first end (S3a), which is connected to the other of the second terminals (18) of the module (14), and a second end (S3b), which is connected to the other of the first terminals (16) of the module, and
- a fourth switch (S4), which is provided in a connecting line (36) connecting the first end (S2a) of the second switch (S2) to the second end (S3b) of the third switch (S3), wherein the storage element (26)/energy conversion element and the first switch (S1) are connected between the second end (S2b) of the second switch (S2) and the second end (S3b) of the third switch (S3).

2. Energy storage direct converter system (10) according to claim 1, wherein the control device (20) is suitable for actuating at least some of said plurality of switches (28) depending on the current state of charge of the storage elements (26) or the current power or voltage of the energy conversion elements in a charging mode in order to charge at least some of the storage elements (26) by an external AC or DC voltage applied to the bridge branch (12).

3. Energy storage direct converter system (10) according to claim 1, wherein the storage element/energy conversion element (26) can be deactivated by a position of the switches (28) of the relevant module (26) in which at least one of the poles of the storage element (26)/energy conversion element is not connected to any of the first and second terminals (16, 18),

4. Energy storage direct converter system (10) according to one of the preceding claims, wherein the modules (14) can be operated only in two quadrants of the current-voltage plane, and wherein an additional circuit (34) is provided by which a chain of two-quadrant modules (14) connected in series can be reversed as a whole,

5. Energy storage direct converter system (10) according to one of the preceding claims, wherein the two outer terminals (16, 18) in the first and/or last module of the bridge branch are connected to one another.

6. Energy storage direct converter system (10) according to one of the preceding claims, comprising two, three, four, five or more bridge branches (12), and/or
wherein the two outer terminals (16, 18) in the first and/or last module (14) of a bridge branch (12) are separately connected to two outer terminals (16, 18) of a module (14) of an adjacent bridge branch (12), wherein
said two, three, four, five or more bridge branches (12) are preferably interconnected in a star topology or in a ring topology, and/or
wherein the two, three, four, five or more bridge branches (12) are preferably interconnected in a ring topology such that the at least two outer terminals (16, 18) of each bridge branch (12) are separately connected to the at least two outer terminals (16, 18) of the adjacent bridge branch (12),
and wherein the control device (20) is configured to control at least some of said plurality of switches (28) such that at least two mutually independent ring currents can flow through the ring of bridge branches (12).

7. Energy storage direct converter system (10) according to one of the preceding claims, wherein inductances (24) are provided within the at least one bridge branch (12), in particular within a module or between adjacent modules, and/or
wherein the switches (28) are formed at least predominantly by MOS-FETs (30), IGBTs, IGCTs or thyristors, and/or
wherein the storage elements (26) are formed by one or more of the following elements:
- a capacitor,
- a battery cell, in particular a second-use cell,
- a redox flow cell, and/or
wherein the energy conversion elements are formed by solar cells, fuel cells or thermocouples, and/or
wherein at least a part of said modules (14) comprises a storage element (26) and at least a part of the modules (14) comprises an energy conversion element.

8. The energy storage direct converter system (10) according to one of the preceding claims, wherein a part of the modules (14) comprises storage elements (26) of a first type and another part of the modules (14) comprises storage elements (26) of a second type different from the first type, wherein the first type and the second type differ, in particular in one or more of the following features:
- charging time,
- internal resistance,
- capacitance, and/or
wherein at least a part of the modules comprises both a storage element and an energy conversion element.

9. Energy storage direct converter system (10) according to one of the preceding claims, wherein the control device (20) is suitable for determining groups of modules (14) whose storage elements (26) are to be connected in parallel,
wherein the control device is configured to actuate at least some of said plurality of switches (28) depending on the current state of charge of the storage elements (26) in such a way that, before the modules (14) of the group are connected in parallel, the voltages or states of charge of the modules are equalized by
- during a charging process, preferentially charging modules (14) or module subgroups which have a lower voltage or a lower state of charge, and/or
- during an energy output mode, preferentially discharging modules (14) or module subgroups which have a high voltage or a high state of charge, and/or
wherein the control circuit (20) is configured to determine the capacitance of the storage element (26) of a module (14) by completely charging and completely discharging the storage element (26) during operation of the system and detecting the energy which flows into or out of the storage element (26), and/or
wherein the control device (20) is suitable for identifying faulty modules by testing,
wherein the testing includes one or more of the following criteria:
- Is the storage element faulty?
- Is the storage element short-circuited or open?
- Is a bypass mode possible?
- Which switching states are still possible?, and/or
wherein the control device (20) is configured to actuate at least some of the switches (28) in such a way that the system outputs a system voltage, in particular a three-phase system voltage of 1000 V or less, preferably of approximately 400 V.

10. An electric drive for a vehicle, comprising a modular energy storage direct converter system (10) according to one of the preceding claims.

11. A method for manufacturing a modular energy storage direct converter system (10), in particular an energy storage direct converter system (10) according to one of claims 1-10, comprising:
providing at least one bridge branch (12) comprising a plurality of modules (14) connected in series, wherein each of said modules (14) comprises
- two first terminals (16) and two second terminals (18),
- a storage element (26) for electrical energy, in particular a battery, or an energy conversion element, and
- exactly four switches (28),
wherein, in each two adjacent modules (14) out of said modules (14), the first terminals (16) of one module are connected to the second terminals (18) of the other module (14) directly or via a component connected in between,
providing a control device (20) which
- is configured to obtain information relating to the current state of charge of the storage elements (26) or voltage or power of the energy conversion elements, and
- which is suitable for actuating at least some of said plurality of switches (28) depending on the current state of charge of the storage elements (26) or the current power or voltage of the energy conversion elements in an energy output mode in such a way that the bridge branch (12) as a whole supplies a desired voltage or a phase of a desired voltage,
wherein said modules (14) are designed and can be actuated in such a way that
- the storage element (26) or energy conversion element of a module (14) can be selectively deactivated, and
- the storage elements (26) or energy conversion elements of two modules (14), which are separated by at least one intermediate module (14) with a deactivated storage element (26)/energy conversion element, can be selectively connected in parallel and in series, wherein the storage element (26)/energy conversion element of a module (14) has two poles (26a, 26b) and is connected in series with a first switch (S1) between the two first terminals (16) of the module (14), so that one of the poles (26a, 26b) of the storage element (26)/energy conversion element can be decoupled from the rest of the module (14) by the first switch (S1),
wherein the exactly four switches (28) further comprise:
- a second switch (S2) with a first end (S2a), which is connected to one of the second terminals (18) of the module (14), and a second end (S2b), which is connected to one of the first terminals (16) of the module,
- a third switch (S3) with a first end (S3a), which is connected to the other of the second terminals (18) of the module (14), and a second end (S3b), which is connected to the other of the first terminals (16) of the module, and
- a fourth switch (S4), which is provided in a connecting line (36) connecting the first end (S2a) of the second switch (S2) to the second end (S3b) of the third switch (S3), wherein the storage element (26)/energy conversion element and the first switch (S1) are connected between the second end (S2b) of the second switch (S2) and the second end (S3b) of the third switch (S3).

12. The method according to claim 11, wherein second-use battery cells are used for the storage elements (26).

13. A method for providing a desired voltage or a phase of a desired voltage, comprising:
receiving information relating to the current state of charge of storage elements (26) or voltage or power of energy conversion elements comprised in a plurality of modules (14) connected in series, wherein each of said modules (14) comprises
- two first terminals (16) and two second terminals (18),
- a storage element (26) for electrical energy, in particular a battery, or an energy conversion element, and
- exactly four switches (28),
wherein, in each two adjacent modules (14) out of said modules, the first terminals (16) of one module (14) are connected to the second terminals (18) of the other module (14) directly or via a component connected in between,
actuating at least some of said plurality of switches (28) depending on the current state of charge of the storage elements (26) or the current power or voltage of the energy conversion elements in such a way that a bridge branch (12) comprising a plurality of such modules (14) connected in series as a whole supplies a desired voltage or a phase of a desired voltage,
wherein at least one storage element (26) or energy conversion element of a module is deactivated, and
the storage elements (26) or energy conversion elements of two modules (14), which are separated by at least one intermediate module (14) with a deactivated storage element/energy conversion element, are connected in parallel or in series,
wherein the storage element (26)/energy conversion element of a module (14) has two poles (26a, 26b) and is connected in series with a first switch (S1) between the two first terminals (16) of the module (14), so that one of the poles (26a, 26b) of the storage element (26)/energy conversion element can be decoupled from the rest of the module (14) by the first switch (S1),
wherein the exactly four switches (28) further comprise:
- a second switch (S2) with a first end (S2a), which is connected to one of the second terminals (18) of the module (14), and a second end (S2b), which is connected to one of the first terminals (16) of the module,
- a third switch (S3) with a first end (S3a), which is connected to the other of the second terminals (18) of the module (14), and a second end (S3b), which is connected to the other of the first terminals (16) of the module, and
- a fourth switch (S4), which is provided in a connecting line (36) connecting the first end (S2a) of the second switch (S2) to the second end (S3b) of the third switch (S3), wherein the storage element (26)/energy conversion element and the first switch (S1) are connected between the second end (S2b) of the second switch (S2) and the second end (S3b) of the third switch (S3).

14. The method according to claim 13, which is carried out for operating a modular energy storage direct converter system (10) according to one of claims 1 to 9, and/or comprising the steps of:
determining groups of modules (14) whose storage elements (26) are to be connected in parallel, and
equalizing the voltages or states of charge of the modules within the group, before the modules (14) of the group are connected in parallel, by
- during a charging process, preferentially charging modules (14) or module subgroups which have a lower voltage or a lower state of charge, and/or
- during an energy output mode, preferentially discharging modules (14) or module subgroups which have a high voltage or a high state of charge.

15. The method according to one of claims 13 or 14, wherein further the capacitance of the storage element (26) of a module (14) is determined by completely charging and completely discharging the storage element (26) during operation of the system (10) and detecting the energy which flows into or out of the storage element (26), and/or wherein faulty modules (14) are identified by testing one or more of the following criteria:
- Is the storage element faulty?
- Is the storage element short-circuited or open?
- Is a bypass mode possible?
- Which switching states are still possible?

## Revendications

1. Système de convertisseur direct à accumulateur d'énergie (10), qui comprend ce qui suit :
au moins une branche de pont (12) qui comprend une pluralité de modules (14) branchés les uns après les autres,
dans lequel chacun des modules (14) mentionnés comprend
- deux premiers raccordements (16) et deux deuxièmes raccordements (18),
- un élément accumulateur (26) pour l'énergie électrique, plus particulièrement une batterie ou un élément de conversion d'énergie et
- exactement quatre interrupteurs (28),
dans lequel, dans deux modules (14) adjacents parmi les modules (14) mentionnés, les premiers raccordements (16) d'un module sont reliés directement ou par l'intermédiaire d'un composant, avec les deuxièmes raccordements (18) de l'autre module (14) et
un dispositif de commande (20) qui
- est conçu pour recevoir des informations concernant l'état de charge actuel des éléments accumulateurs (26) ou la tension ou la puissance des éléments de conversion d'énergie et
- est conçu pour contrôler au moins une partie de la pluralité mentionnée d'interrupteurs (28) en fonction de l'état de charge actuel des éléments accumulateurs (26) ou de la puissance ou de la tension actuelle des éléments de conversion d'énergie dans un mode de distribution d'énergie de façon à ce que la branche de pont (12) dans son ensemble délivre une tension souhaitée ou une phase d'une tension souhaitée,
dans lequel les modules (14) mentionnés sont conçus et peuvent être contrôlés de façon à ce que
- l'élément accumulateur (26) ou l'élément de conversion d'énergie d'un module (14) puisse être désactivé sélectivement et
- les éléments accumulateurs (26) ou les éléments de conversion d'énergie peuvent être branchés sélectivement en parallèle et en série à l'aide de deux modules (14), qui sont séparés par au moins un module (14) se trouvant entre eux, avec un élément accumulateur (26) / élément de conversion d'énergie désactivé,
dans lequel l'élément accumulateur (26) / élément de conversion d'énergie d'un module (14) comprend deux pôles (26a, 26b) et est branché en série avec un premier interrupteur (S1) entre les deux premiers raccordements (16) du module (14), de façon à ce qu'un des pôles (26a, 26b) de l'élément accumulateur (26) / élémentd e conversion d'énergie peut être découplé du reste du module (14) par le premier interrupteur (S1),
dans lequel les exactement quatre interrupteurs (28) comprennent en outre ce qui suit :
- un deuxième interrupteur (S2) avec une première extrémité (S2a), qui est reliée avec un des deuxièmes raccordements (18) du module (14), et une deuxième extrémité (S2b),
qui est reliée avec un des premiers raccordements (16) du module,
- un troisième interrupteur (S3) avec une premièrae extrémité (S3a), qui est reliée avec l'autre des deuxièmes raccordements (18) du module (14), et une deuxième extrémité (S3b), qui est reliée avec l'autre des premiers raccordements (16) du module et
- un quatrième interrupteur (S4), qui est prévu dans une ligne de raccordement (36), qui relie la première extrémité (S2a) du deuxième interrupteur (S2) avec la deuxième extrémité (S3b) du troisième interrupteur (S3), dans lequel l'élément accumulateur (26) / élément de conversion d'énergie et le premier interrupteur (S1) est branché entre la deuxième extrémité (S2b) du deuxième interrupteur (S2) et la deuxième extrémité (S3b) du troisième interrupteur (S3).

2. Système de convertisseur direct à accumulateur d'énergie (10) selon la revendication 1, dans lequel le dispositif de commande (20) est conçu pour contrôler au moins une partie de la pluralité mentionnée d'interrupteurs (28) en fonction de l'état de charge actuel des éléments accumulateurs (26) ou de la puissance ou de la tension actuelle des éléments de conversion d'énergie, dans un mode de charge, afin de charger au moins une partie des éléments accumulateurs (26) à l'aide d'une tension AC ou DC externe appliquée à la branche de pont (12).

3. Système de convertisseur direct à accumulateur d'énergie (10) selon la revendication 1, dans lequel l'élément accumulateur / élément de conversion d'énergie (26) peut être désactivé par une position des interrupteurs (28) du module (26) concerné dans laquelle au moins un des pôles de l'élément accumulateur (26) / élément de conversion d'énergie n'est relié avec aucun des premiers et deuxièmes raccordements (16, 18).

4. Système de convertisseur direct à accumulateur d'énergie (10) selon l'une des revendications précédentes, dans lequel les modules (14) peuvent fonctionner uniquement dans deux quadrants du niveau de courant-tension et dans lequel un circuit supplémentaire (34) est prévu par l'intermédiaire duquel la polarité d'une chaîne de modules à deux quadrants (14), branchés les uns après les autres, peut être inversée dans son ensemble.

5. Système de convertisseur direct à accumulateur d'énergie (10) selon l'une des revendications précédentes, dans lequel les deux raccordements externes (16, 18) sont reliés entre eux dans le premier et/ou le dernier module de la branche de pont.

6. Système de convertisseur direct à accumulateur d'énergie (10) selon l'une des revendications précédentes, qui contient deux, trois, quatre, cinq branches de pont (12) ou plus et/ou dans lequel les deux raccordements externes (16, 18) dans le premier et/ou le dernier module (14) d'une branche de pont (12) sont reliés séparément avec deux raccordements externes (16, 18) d'un module (14) d'une branche de pont (12) adjacent, dans lequel
les deux, trois, quatre, cinq branches de pont (12) ou plus mentionnées sont branchées de préférence avec une topologie en forme d'étoile ou en forme d'anneau et/ou
dans lequel les deux, trois, quatre, cinq branches de pont (12) ou plus sont branchées de préférence avec une topologie en forme d'anneau, de façon à ce que les au moins deux raccordements externes (16, 18) de chaque branche de pont (12) sont reliés séparément avec les au moins deux raccordements externes (16, 18) de la branche de pont (12) adjacente,
et dans lequel le dispositif de commande (20) est conçu pour contrôler au moins une partie de la pluralité mentionnée d'interrupteurs (28) de façon à ce qu'au moins deux courants annulaires indépendants antre eux puissent circuler à travers l'anneau constitué des branches de pont (12).

7. Système de convertisseur direct à accumulateur d'énergie (10) selon l'une des revendications précédentes, dans lequel, à l'intérieur de l'au moins une branche de pont (12), plus particulièrement à l'intérieur d'un module ou entre des modules adjacents, des inductances (24) sont prévues et/ou
dans lequel les interrupteurs (28) sont constitués au moins majoritairement de MOSFET (30) ; IGBT, IGCT ou de tyristors et/ou
dans lequel les éléments accumulateurs (26) sont constitués d'un ou plusieurs des éléments suivants :
- un condensateur,
- une cellule de batterie, plus particulièrement une cellule Second Use,
- une cellule de flux redox et/ou
dans lequel les éléments de conversion d'énergie sont constitués de cellules photovoltaïques, de cellules à combustible ou de thermocouples et/ou
dans lequel au moins une partie des modules (14) mentionnés comprend un élément accumulateur (26) et au moins une partie des modules (14) comprend un élément de conversion d'énergie.

8. Système de convertisseur direct à accumulateur d'énergie (10) selon l'une des revendications précédentes, dans lequel une partie des modules (14) comprend des éléments accumulateurs (26) d'un premier type et une autre partie des modules (14) comprend des éléments accumulateurs (26) d'un deuxième type, différent du premier type, dans lequel le premier type et le deuxième type se distinguent plus particulièrement par une ou plusieurs des caractéristiques suivantes :
- temps de charge,
- résistance interne,
- capacité et/ou
dans lequel au moins une partie des modules contient aussi bien un élément accumulateur qu'un élément de conversion d'énergie.

9. Système de convertisseur direct à accumulateur d'énergie (10) selon l'une des revendications précédentes, dans lequel le dispositif de commande (20) est conçu pour déterminer des groupes de modules (14) dont les éléments accumulateurs (26) doivent être branchés en parallèle,
dans lequel le dispositif de commande est conçu pour contrôler au moins une partie de la pluralité mentionnée d'interrupteurs (28) en fonction de l'état de charge actuel des éléments accumulateurs (26) de façon à ce que, avant le branchement en parallèle des modules (14) du groupe, les tensions ou les états de charge des modules sont ajustés grâce au fait que
- pendant un processus de charge, des modules (14), ou des sous-groupes de modules, qui présentent une tension ou un état de charge plus faible, sont chargés de préférence et/ou
- pendant un mode de distribution d'énergie, des modules (14) ou sous-groupes de modules, qui présentent une tension ou un état de charge élevé, sont déchargés de préférence et/ou
dans lequel le circuit de commande (20) est conçu pour déterminer la capacité de l'élément accumulateur (26) d'un module (14) en chargeant et en déchargeant entièrement l'élément accumulateur (26) lors du fonctionnement du système et l'énergie qui circule dans ou hors de l'élément accumulateur (26), est mesurée et/ou
dans lequel le dispositif de commande (20) est conçu pour identifier des modules défectueux à l'aide d'une vérification, dans lequel la vérification comprend un ou plusieurs des critères suivants :
- l'élément accumulateur est-il défectueux ?
- L'élément accumulateur est-il court-circuité ou ouvert ?
- Un mode de bypass est-il possible ?
- Quels états de branchement sont encore possibles ? et/ou
dans lequel le dispositif de commande (20) est conçu pour contrôler au moins une partie des interrupteurs (28) de façon à ce que le système génère une tension de réseau, plus particulièrement une tension de réseau triphasée de 1000 V ou moins, de préférence d'environ 400 V.

10. Entraînement électrique pour un véhicule, comprenant un système de convertisseur direct à accumulateur d'énergie (10) selon l'une des revendications précédentes.

11. Procédé de fabrication d'un système de convertisseur direct à accumulateur d'énergie (10) modulaire, plus particulièrement d'un système de convertisseur direct à accumulateur d'énergie (10) selon l'une des revendications 1 - 10, qui comprend ce qui suit :
mise à disposition d'au moins une branche de pont (12), qui comprend une pluralité de modules (14) disposés les uns derrière les autres, dans lequel chacun des modules (14) mentionnés comprend
- deux premiers raccordements (16) et deux deuxièmes raccordements (18),
- un élément accumulateur (26) pour l'énergie électrique, plus particulièrement une batterie ou un élément de conversion d'énergie et
- exactement quatre interrupteurs (28),
dans lequel, dans deux modules (14) adjacents parmi les modules (14) mentionnés, les premiers raccordements (16) d'un module sont reliés, directement ou par l'intermédiaire de composants branchés au milieu, avec les deuxièmes raccordements (18) de l'autre module (14),
mise à disposition d'un dispositif de commande (20) qui est conçu
- pour recevoir des informations concernant l'état de charge actuel des éléments accumulateurs (26) ou la tension ou la puissance des éléments de conversion d'énergie et
- pour contrôler au moins une partie de la pluralité mentionnée d'interrupteurs (28) en fonction de l'état de charge actuel des éléments accumulateurs (26) ou de la puissance ou de la tension actuelle des éléments de conversion d'énergie dans un mode de distribution d'énergie de façon à ce que la branche de pont (12) dans son ensemble délivre une tension souhaitée ou une phase d'une tension souhaitée,
dans lequel les modules (14) mentionnés sont conçus et peuvent être contrôlés de façon à ce que
- l'élément accumulateur (26) ou l'élément de conversion d'énergie d'un module (14) peut être désactivé de manière sélectivement et
- les éléments accumulateurs (26) ou les éléments de conversion d'énergie peuvent être branchés, sélectivement en parallèle ou en série, à l'aide de deux modules (14), qui sont séparés par au moins un module (14) se trouvant entre eux, avec un élément accumulateur (26) / élément de conversion d'énergie désactivé, dans lequel l'élément accumulateur (26) / élément de conversion d'énergie d'un module (14) comprend deux pôles (26a, 26b) et est branché en série avec un premier interrupteur (S1) entre les deux premiers raccordements (16) du module (14), de façon à ce qu'un des pôles (26a, 26b) de l'élément accumulateur (26) / élément de conversion d'énergie puisse être découplé du reste du module (14) par le premier interrupteur (S1),
dans lequel les exactement quatre interrupteurs (28) comprennent en outre ce qui suit :
- un deuxième interrupteur (S2) avec une première extrémité (S2a), qui est reliée avec un des deuxièmes raccordements (18) du module (14), et une deuxième extrémité (S2b),
qui est reliée avec un des premiers raccordements (16) du module,
- un troisième interrupteur (S3) avec une première extrémité (S3a), qui est reliée avec l'autre des deuxièmes raccordements (18) du module (14), et une deuxième extrémité (S3b), qui est reliée avec l'autre des premiers raccordements (16) du module et
- un quatrième interrupteur (S4), qui est prévu dans une ligne de raccordement (36), qui relie la première extrémité (S2a) du deuxième interrupteur (S2) avec la deuxième extrémité (S3b) du troisième interrupteur (S3), dans lequel l'élément accumulateur (26) / élément de conversion d'énergie et le premier interrupteur (S1) sont branchés entre la deuxième extrémité (S2b) du deuxième interrupteur (S2) et la deuxième extrémité (S3b) du troisième interrupteur (S3).

12. Procédé selon la revendication 11, dans lequel, pour les éléments accumulateurs (26), des cellules de batterie Second Use sont utilisées.

13. Procédé de mise à disposition d'une tension souhaitée ou d'une phase d'une tension souhaitée, qui comprend ce qui suit :
réception d'informations concernant l'état de charge actuel d'éléments accumulateurs (26) ou de la tension ou de la puissance d'éléments de conversion d'énergie, qui sont contenus dans une pluralité de modules (14) branchés les uns derrière les autres, dans lequel chacun des modules (14) mentionnés comprend
- deux premiers raccordements (16) et deux deuxièmes raccordements (18),
- un élément accumulateur (26) pour l'énergie électrique, plus particulièrement une batterie, ou un élément de conversion d'énergie et
- exactement quatre interrupteurs (28),
dans lequel, dans deux modules (14) adjacents parmi les modules (14) mentionnés, les premiers raccordements (16) d'un module sont reliés directement ou par l'intermédiaire d'un composant, avec les deuxièmes raccordements (18) de l'autre module (14),
contrôle d'au moins une partie de la pluralité mentionnée d'interrupteurs (28) en fonction de l'état de charge actuel des éléments accumulateurs (26) ou de la puissance ou de la tension actuelle des éléments de conversion d'énergie, de façon à ce qu'une branche de pont (12), qui comprend une pluralité de modules (14) branchés les uns derrière les autres, délivre dans son ensemble une tension souhaitée ou une phase d'une tension souhaitée,
dans lequel au moins un élément accumulateur (26) ou un élément de conversion d'énergie d'un module est désactivé et
les éléments accumulateurs (26) ou les éléments de conversion d'énergie de deux modules (14), qui sont séparés par au moins un module (14) disposé entre eux avec un élément accumulateur / élément de conversion d'énergie désactivé, sont branchés en parallèle ou en série,
dans lequel l'élément accumulateur (26) / élément de conversion d'énergie d'un module (14) comprend deux pôles (26a, 26b) et est branché en série avec un premier interrupteur (S1) entre les deux premiers raccordements (16) du module (14), de façon à ce qu'un des pôles (26a, 26b) de l'élément accumulateur (26) / élément de conversion d'énergie puisse être découplé du reste du module (14) par le premier interrupteur (S1),
dans lequel les exactement quatre interrupteurs (28) comprennent en outre ce qui suit :
- un deuxième interrupteur (S2) avec une première extrémité (S2a), qui est reliée avec un des deuxièmes raccordements (18) du module (14), et une deuxième extrémité (S2b),
qui est reliée avec un des premiers raccordements (16) du module,
- un troisième interrupteur (S3) avec une première extrémité (S3a), qui est reliée avec l'autre des deuxièmes raccordements (18) du module (14), et une deuxième extrémité (S3b), qui est reliée avec l'autre des premiers raccordements (16) du module et
- un quatrième interrupteur (S4), qui est prévu dans une ligne de raccordement (36), qui relie la première extrémité (S2a) du deuxième interrupteur (S2) avec la deuxième extrémité (S3b) du troisième interrupteur (S3), dans lequel l'élément accumulateur (26) / élément de conversion d'énergie et le premier interrupteur (S1) sont branchés entre la deuxième extrémité (S2b) du deuxième interrupteur (S2) et la deuxième extrémité (S3b) du troisième interrupteur (S3).

14. Procédé selon la revendication 13, qui est conçu pour le fonctionnement d'un système de convertisseur directe à accumulateur d'énergie (10) selon l'une des revendications 1 à 9, et/ou
avec les étapes suivantes :
détermination de groupes de modules (14) dont les éléments accumulateurs (26) doivent être branchés en parallèle et
ajustement des tensions ou des états de charge des modules à l'intérieur d'un groupe, avant le branchement en parallèle des modules (14) du groupe, grâce au fait que
- pendant un processus de charge, les modules (14) ou sous-groupes de modules, qui présentent une tension ou un état de charge plus faible, sont chargés de préférence et/ou
- pendant un mode de distribution d'énergie, les modules (14) ou sous-groupes de modules, qui présentent une tension ou un état de charge élevé, sont déchargés de préférence.

15. Procédé selon l'une des revendications 13 ou 14, dans lequel, en outre, la capacité de l'élément accumulateur (26) d'un module (14) est déterminée, en chargeant et déchargeant entièrement l'élément accumulateur (26) lors du fonctionnement du système (10) et l'énergie qui circule dans ou hors de l'élément accumulateur (26), est mesurée et/ou
dans lequel les modules (14) défectueux sont identifiés en vérifiant un ou plusieurs des critères suivants :
- l'élément accumulateur est-il défectueux ?
- L'élément accumulateur est-il court-circuité ou ouvert ?
- Un mode de bypass est-il possible ?
- Quels états de branchement sont encore possibles ?
